(19) Europäisches Patentamt
European Patent Office
Office européen des brevets

(11) Veröffentlichungsnummer: **0 075 808**
**A2**

(12) # EUROPÄISCHE PATENTANMELDUNG

(21) Anmeldenummer: **82108615.4**

(22) Anmeldetag: **18.09.82**

(51) Int. Cl.³: **C 09 B 62/006**
D 06 P 1/38

(30) Priorität: **30.09.81 DE 3138774**

(43) Veröffentlichungstag der Anmeldung:
**06.04.83 Patentblatt 83/14**

(84) Benannte Vertragsstaaten:
**CH DE FR GB IT LI**

(71) Anmelder: **BAYER AG**
**Zentralbereich Patente, Marken und Lizenzen**
**D-5090 Leverkusen 1, Bayerwerk(DE)**

(72) Erfinder: **Herd, Karl Josef, Dr.**
**Buchholzstrasse 32**
**D-5000 Köln 80(DE)**

(54) **3,6-Dioxo-1,2-dihydro-7H-pyrazolo 3,4-b pyridin-Farbstoffe.**

(57) Farbstoffe der allgemeinen Formel

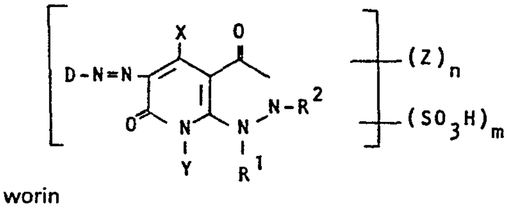

(1)

worin
D, X, Y, Z, $R^1$, $R^2$ sowie m und n die im Anmeldungstext angegebene Bedeutung besitzen,
sind sehr gut geeignet zum Färben und Bedrucken von hydroxylgruppen- oder amidgruppenhaltigen sowie von synthetischen Fasern, bzw. können als Pigmente Verwendung finden.

EP 0 075 808 A2

BAYER AKTIENGESELLSCHAFT 5090 Leverkusen, Bayerwerk

Zentralbereich
Patente, Marken und Lizenzen Er/by/bo/c

# 3,6-Dioxo-1,2-dihydro-7H-pyrazolo/3,4-b/pyridin-Farbstoffe

Die vorliegende Erfindung betrifft neue Farbstoffe der allgemeinen Formel

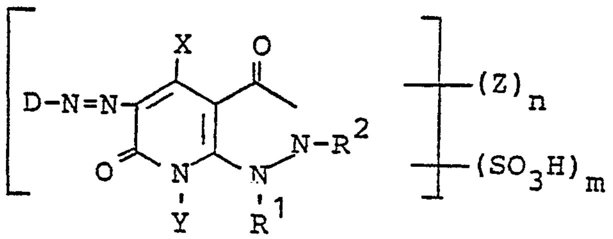

(I)

worin

D = gegebenenfalls durch ein Metallkation komplexierter Rest einer Diazokomponente der Benzol-, Naphthalin- oder Heterocyclen-Reihe,

X = Wasserstoff, gegebenenfalls substituiertes Alkyl, gegebenenfalls substituiertes Aryl, $COOR^3$, $CON(R^3)_2$, $CONHR^3$, $NHR^3$, gegebenenfalls substituiertes Hetaryl,

Y = Wasserstoff, gegebenenfalls substituiertes Alkyl, gegebenenfalls substituiertes Aryl, Alkenyl, OH, $NHCOR^3$,

Z = Rest einer Reaktivgruppe
n = 0 bis 2
m = 0 bis 6

wobei

$R^1$,$R^2$ und $R^3$ gleich oder verschieden sind und für Wasserstoff, gegebenenfalls substituiertes Alkyl, gegebenenfalls substituiertes Aryl, gegebenenfalls substituiertes Hetaryl, gegebenenfalls substituiertes Aralkyl, gegebenenfalls substituiertes Alkenyl oder Acyl oder für gegebenenfalls durch O, NH, SO, $SO_2$ unterbrochenes Alkenylen stehen und wobei die Substituenten Z und/oder $SO_3H$ an die Reste D und/oder X und/oder $R_1$ und/oder $R_2$ und/oder $R_3$ gebunden sind.

Im Rahmen der vorliegenden Erfindung sollen in der Beschreibung und in den Ansprüchen auch die möglichen tautomeren Formen sowie die Alkalisalze der sulfogruppenhaltigen Farbstoffe des Typs der Formel (I) verstanden sein.

Als gegebenenfalls substituiertes Alkyl X, $R_1$, $R_2$ oder $R_3$ steht geradkettiges oder verzweigtes Alkyl mit vorzugsweise 1 bis 6, insbesondere 1 bis 4 Kohlenstoffatomen. Beispielhaft seien gegebenenfalls substituiertes Methyl, Ethyl, n- und iso-Propyl, n-, iso- und tert.-Butyl genannt.

Als gegebenenfalls substituiertes Alkenyl Y, $R_1$, $R_2$ oder $R_3$ steht geradkettiges oder verzweigtes Alkenyl für vorzugsweise 2 bis 6, insbesondere 2 bis 4 Kohlenstoffatomen. Beispielhaft seien gegebenenfalls substi-

tuiertes Ethenyl, Propenyl-(1), Propenyl-(2) und Butenyl-(3) genannt.

Als gegebenenfalls substituiertes Aryl X, Y, $R_1$, $R_2$ und $R_3$ steht Aryl mit vorzugsweise 6 oder vorzugsweise 6 bis 10 Kohlenstoffatomen im Arylteil. Beispielhaft seien gegebenenfalls substituiertes Phenyl oder Naphthyl genannt.

Als gegebenenfalls substituiertes Aralkyl $R_1$, $R_2$ oder $R_3$ steht gegebenenfalls im Arylteil und/oder Alkylteil substituiertes Aralkyl mit vorzugsweise 6 oder 10, insbesondere 6 Kohlenstoffatomen im Arylteil und vorzugsweise 1 bis 4, insbesondere 1 oder 2 Kohlenstoffatomen im Alkylteil, wobei der Alkylteil geradkettig oder verzweigt sein kann. Beispielhaft seien gegebenenfalls substituiertes Benzyl und Phenylethyl genannt.

Als gegebenenfalls substituiertes Hetaryl X, $R_1$, $R_2$ oder $R_3$ stehen heteroaromatische 5- bis 7-gliedrige, vorzugsweise 5- oder 6-gliedrige Ringe mit vorzugsweise 1 bis 3, insbesondere 1 oder 2 gleichen oder verschiedenen Heteroatomen. Als Heteroatome stehen Sauerstoff, Schwefel oder Stickstoff. Als Beispiele seien gegebenenfalls substituiertes Furyl, Thienyl, Pyrazolyl, Imidazolyl, 1,2,3- und 1,2,4-Triazolyl, Oxazolyl, Isoxazolyl, Thiazolyl, Isothiazolyl, 1,2,3-, 1,3,4-, 1,2,4- und 1,2,5-Oxadiazolyl, Pyrrolyl, Isopyrrolyl, Pyridyl, Pyrimidinyl, Pyrazinyl, 1,3,5-, 1,2,4- und 1,2,3-Triazinyl genannt.

Als Acyl $R_1$, $R_2$ oder $R_3$ steht Acyl mit vorzugsweise 1 bis 6, insbesondere mit 1 bis 4 Kohlenstoffatomen. Beispielhaft seien aufgeführt: Formyl, Acetyl, Propionyl, n-Butyryl, i-Butyryl.

Die Reste X, Y, $R_1$, $R_2$ und $R_3$ können wie aus Formel (I) ersichtlich, durch $SO_3H$ substituiert sein. Weiterhin können X, Y, $R_1$, $R_2$ und $R_3$ einen oder mehrere, vorzugsweise 1 bis 3, insbesondere 1 oder 2 gleiche oder verschiedene Substituenten tragen. Als Substituenten seien beispielhaft aufgeführt: Alkyl mit vorzugsweise 1 bis 4, insbesondere 1 oder 2 Kohlenstoffatomen, wie Methyl, Ethyl, n- und i-Propyl und n-, i- und t-Butyl; Alkoxy mit vorzugsweise 1 bis 4, insbesondere 1 oder 2 Kohlenstoffatomen, wie Methoxy, Ethoxy, n- und i-Propyloxy und n-, i- und t-Butyloxy; Alkylthio mit vorzugsweise 1 bis 4, insbesondere 1 oder 2 Kohlenstoffatomen, wie Methylthio, Ethylthio, n- und i-Propylthio und n-, i- und t-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl; Hydroxy; Halogen, vorzugsweise Fluor, Chlor, Brom und Jod, insbesondere Chlor und Brom; Cyano; Nitro; Amino; Monoalkyl- und Dialkylamino mit vorzugsweise 1 bis 4, insbesondere 1 oder 2 Kohlenstoffatomen je Alkylgruppe,

wie Methylamino, Methyl-ethyl-amino, n- und i-Propylamino und Methyl-n-butylamino; Carboxyl; Carbalkoxy mit vorzugsweise 2 bis 4, insbesondere 2 oder 3 Kohlenstoffatomen, wie Carbomethoxy und Carboethoxy; Alkylsulfonyl mit vorzugsweise 1 bis 4, insbesondere 1 oder 2 Kohlenstoffatomen, wie Methylsulfonyl und Ethylsulfonyl; Arylsulfonyl mit vorzugsweise 6 oder 10 Arylkohlenstoffatomen, wie Phenylsulfonyl.

Besonders bevorzugt sind folgende Farbstofftypen:

A) Farbstoffe gemäß Formel (I), wobei die einzelnen Substituenten bzw. Indices folgende Bedeutung besitzen:

D = gegebenenfalls durch $SO_3H$ und/oder Chlor und/oder Alkoxy ($C_1$-$C_4$) und/oder Alkyl ($C_1$-$C_4$) und/oder Acetylamino und/oder Carbalkoxy und/oder Sulfonamido substituiertes Phenyl, gegebenenfalls durch $SO_3H$ und/oder Chlor und/oder Alkoxy ($C_1$-$C_4$) und/oder Alkyl ($C_1$-$C_4$) substituiertes Naphthyl, gegebenenfalls durch $SO_3H$ substituiertes 4-(Phenylazo)phenyl, gegebenenfalls durch $SO_3H$ substituiertes Biphenylyl

X = H, Alkyl ($C_1$-$C_4$), Phenyl, Naphthyl, Benzyl, Alkoxy($C_1$-$C_4$)phenyl, COOH,

Y = H, Alkyl($C_1$-$C_4$), Phenyl, Naphthyl, Benzyl, Alkoxy($C_1$-$C_4$)phenyl,

$R^1$ = H, Alkyl ($C_1$-$C_4$)

$R_2$ = H, $C_6H_5$, gegebenenfalls durch $SO_3H$, OH, Cl, COOH substituiertes Alkyl ($C_1$-$C_4$), $C_6H_4$-$SO_3H$,

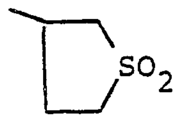 ,

n = 0 und

m = 1, 2 oder 3

B) Farbstoffe gemäß Formel (I), wobei die einzelnen Substituenten bzw. Indices folgende Bedeutung haben:

D = Rest einer Diazokomponente der Benzol- oder der Naphthalinreihe,

X = H, Alkyl ($C_1$-$C_4$), Benzyl, Phenylethyl, COOH, Phenyl,

Y = H, Alkyl ($C_1$-$C_4$), Benzyl, Phenylethyl, Phenyl,

$R^1$ = H, Alkyl ($C_1$-$C_4$),

$R^2$ = H, gegebenenfalls durch $SO_3H$ substituiertes Phenyl, gegebenenfalls durch $SO_3H$, OH, Cl, COOH substituiertes Alkyl ($C_1$-$C_4$),

Z = Reaktivrest der Halogenpyrimidinylamino-, Halogentriazinylamino- oder der Vinylsulfonyl-Reihe,

m = 1, 2 oder 3

n = 1 oder 2.

Unter Reaktivgruppen Z werden solche verstanden, die eine oder mehrere reaktive Gruppen oder abspaltbare Substituenten aufweisen, welche beim Aufbringen der Farbstoffe auf Cellulosematerialien in Gegenwart säurebindender Mittel und gegebenenfalls unter Einwirkung von Wärme mit den Hydroxylgruppen der Cellulose oder beim Aufbringen auf Superpolyamidfasern, wie Wolle, mit der NH-Gruppe dieser Fasern unter Ausbildung kovalenter Bindungen zu reagieren vermögen. Derartige faserreaktive Gruppierungen sind aus der Literatur in großer Zahl bekannt.

Erfindungsgemäß geeignete Reaktivgruppen, welche mindestens einen abspaltbaren Substituenten an einen heterocyclischen oder an einen aliphatischen Rest gebunden enthalten, sind unter anderem solche, die mindestens einen reaktiven Substituenten an einen 5- oder 6-gliedrigen heterocyclischen Ring gebunden enthalten, wie an einen Monazin-, Diazin-, Triazin-, z.B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Cinnolin-, Chinazolin-, Chinoxalin-, Acridin-, Phenazin- und Phenanthridin-Ringsystem. Die 5- oder 6-gliedrigen heterocyclischen

Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen:

Halogen (Cl, Br oder F), Ammonium, einschließlich Hydrazinium, Sulfonium, Sulfonyl, Azido ($N_3$), Rhodanido, Thio, Thioether, Oxyether, Sulfinsäure und Sulfonsäure. Im einzelnen sind beispielsweise zu nennen:

Mono- oder Dihalogen-symmetrische-triazinylreste, z.B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Ethylamino- oder 2-Propylamino-4-chlortriazinyl-6-, 2-ß-Oxethylamino-4-chlortriazinyl-6-, 2-Di-ß-oxethylamino-4-chlortriazinyl-6- und die entsprechenden Schwefelsäurehalbester, 2-Diethylamino-4-chlortriazinyl-6-, 2-Morpholino- oder 2-Piperidino-4-chlortriazinyl-6-, 2-Cyclohexylamino-4-chlortriazinyl-6-, 2-Arylamino- und substituiertes Arylamino-4-chlortriazinyl-6-, wie Phenylamino-4-chlortriazinyl-6-, 2-(o-, m- oder p-Carboxy- oder Sulfophenyl)amino-4-chlortriazinyl-6-, 2-Alkoxy-4-chlortriazinyl-6-, wie Methoxy- oder Ethoxy-4-chlortriazinyl-6-, 2-(Phenylsulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxy-4-chlortriazinyl-6-, 2-(o-, m- oder p-Methyl- oder Methoxyphenyl)-oxy-4-chlortriazinyl-6-, 2-Alkylmercapto- oder 2-Arylmercapto- oder 2-(substituiertes Aryl)-mercapto-4-chlortriazinyl-6-, wie 2-ß-Hydroxyethyl-mercapto-4-chlortriazinyl-6-, 2-Phenylmercapto-4-chlortriazinyl-6-, 2-(4'-Methylphenyl)-mercapto-4-chlortriazinyl-6-, 2-(2',4'-Dinitro)-phenylmercapto-4-chlortriazinyl-6-, 2-Methyl-4-chlortriazinyl-6-, 2-Phenyl-4-chlortriazinyl-6-, z.B. 2,4-Difluortriazinyl-6-, 2-Amino-4-fluortriazinyl-6-, 2-Alkylamino-4-fluortriazinyl-6-, wie 2-Methylamino-4-fluortriazinyl-6-, 2-Ethylamino- oder 2-Propylamino-4-fluortriazinyl-6-, 2-ß-Oxethylamino-4-fluortriazinyl-6-, 2-Di-ß-oxethylamino-4-fluortriazinyl-6-, und die entsprechenden Schwefelsäurehalbester, 2-Diethylamino-4-fluortriazinyl-6-, 2-Morpholino- oder 2-Piperidino-4-fluortriazinyl-6-, 2-Cyclohexylamino-4-fluortriazinyl-6-, 2-Arylamino- und substituiertes Arylamino-4-fluortriazinyl-6-, wie 2-Phenylamino-4-fluortriazinyl-6-, 2-(o-, m- oder p-Carboxy- oder Sulfophenyl)-amino-4-fluortriazinyl-6-, 2-Alkoxy-4-fluortriazinyl-6-, wie 2-Methoxy- oder Ethoxy-4-fluortriazinyl-6-, 2-(Phenylsulfonylmethoxy)-4-fluortriazinyl-6-, 2-Aryloxy und substituiertes Aryloxy-4-fluortriazinyl-6-, wie 2-Phenoxy-4-fluortriazinyl-6-, 2-(p-Sulfophenyl)-oxy-4-fluortriazinyl-6-, 2-(o-, m- oder p-Methyl- oder Methoxyphenyl)-oxy-4-fluortriazinyl-6-, 2-Alkylmercapto- oder 2-Arylmercapto- oder 2-(substituiertes Aryl)-mercapto-4-fluortriazinyl-6-,

wie 2-ß-Hydroxyethyl-mercapto-4-fluortriazinyl-6-, 2-Phenylmercapto-4-fluortriazinyl-6-, 2-(4'-Methylphenyl)-mercapto-4-fluortriazinyl-6-, 2-(2',4'-Dinitro)-phenylmercapto-4-fluortriazinyl-6-, 2-Methyl-4-fluortriazinyl-6-, 2-Phenyl-4-fluortriazinyl-6-, Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder 5-methyl- oder 5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6-, 2,6-Dichlorpyrimidin-4-carbonyl, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl- oder carbonyl-, ß-(4',5'-Dichlorpyridazon-6'-yl-1')-ethylcarbonyl-, N-Methyl-N-(2,4-dichlortriazinyl-6-)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- oder N-Ethyl-N-(2,4-dichlortriazinyl-6-)-aminoacetyl-, N-Methyl-N-(2,3-dichlorchinoxalin-6-sulfonyl)-amino-

acetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder 5-methsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 5-Chlor-6-chlormethyl-2-fluor-4-pyrimidinyl-, 5-Chlor-6-dichlormethyl-2-fluor-4-pyrimidinyl-,

2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl-)-triazinyl-6-; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidin-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxy-pyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-,

2-Methylsulfonyl-5-cyan-6-methoxy-pyrimidinyl-4-, 2-Methylsulfonyl-5-chlor-pyrimidinyl-4-, 2-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlor-pyrimidin-4- und -5-carbonyl-, 2,6-Bis-(methylsulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl-pyrimidin-5-sulfonyl- oder -carbonyl-; ammoniumgruppenhaltige Triazinringe, wie 2-Trimethylammonium-4-phenylamino- oder -4-(o-, m- oder p-sulfophenyl)-aminotriazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-o-, ferner 4-Phenylamino- oder 4-(sulfophenylamino)-triazinyl-6-Reste, die in 2-Stellung über eine Stickstoffbindung das 1,4-Bis-aza-bicyclo-(2,2,2)-octan oder das 1,2-Bis-aza-bicyclo-(0,3,3)-octan quartär gebunden enthalten, 2-Pyridinium-4-phenylamino- oder -4-(o-, m- oder p-sulfophenyl)-amino-triazinyl-6- sowie entsprechende 2-Oniumtriazinyl-6-Reste, die in 4-Stellung durch Alkylamino-, wie Methylamino-, Ethylamino- oder ß-Hydroxyethylamino-, oder Alkoxy-, wie Methoxy- oder Alkoxy-, oder Aryloxy-, wie Phenoxy- oder Sulfophenoxy-Gruppen substituiert sind; 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie Methylsulfonyl- oder 2-Ethylsulfonylbenzthiazol-5- oder -6-sulfonyl- oder -carbonyl-, 2-Phenylsulfonyl-benzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-chlor-1-methylbenzimidazol-5- oder -6-carbonyl- oder -sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl.

Des weiteren sind Reaktivgruppen der aliphatischen Reihe zu nennen, wie Acryloyl-, Mono-, Di- und Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, ß-Chlorpropionyl-, 3-Phenylsulfonylpropionyl-, 3-Phenylsulfonyl-3-chlor-propionyl-, 3-Phenylsulfonyl-2-chlor-propionyl-, 3-Methylsulfonylpropionyl-, ß-Sulfatoethylaminosulfonyl-, Vinylsulfonyl-, ß-Chlorethylsulfonyl-, ß-Sulfatoethylsulfonyl-, ß-Methylsulfonylethylsulfonyl-, ß-Phenylsulfonethylsulfonyl-, 2-Fluor-2-chlor-3,3-difluorcyclobutan-1-carbonyl-, 2,2,3,3-Tetrafluorcyclobutan-carbonyl-1- oder sulfonyl-1-, ß-(2,2,3,3-Tetrafluorcyclobutyl-1)-acryloyl-, α- oder ß-Bromacryloyl-, α- oder ß-Alkyl- oder Arylsulfonylacryloyl-Gruppe, wie α- oder ß-Methylsulfonylacryloyl.

Als weitere geeignete Reaktivgruppen sind diejenigen der allgemeinen Formel

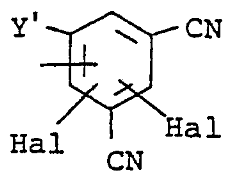

zu nennen, worin

Hal unabhängig voneinander jeweils ein Halogenatom bedeutet, welches die restlichen Stellungen 2, 4 und 6 des Benzolkerns besetzt, und

Y' für H oder einen elektronenanziehenden Substituenten steht,

Hal jeweils Cl oder insbesondere F bedeutet und

Y' einen elektronenanziehenden Substituenten darstellt, insbesondere F, Cl oder CN.

Entsprechende Reaktivreste der letztgenannten Formel werden in der DE-OS 29 16 715 aufgeführt.

Ebenfalls geeignete Reaktivgruppen entsprechen der allgemeinen Formel

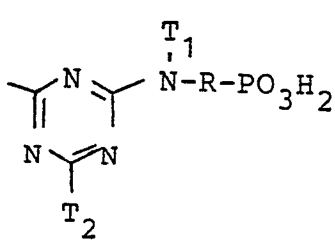

worin

$T_2$ für F, Cl, Br, OH, einen Niederalkoxyrest mit 1 bis 4 C-Atomen, $NH_2$, eine quaternäre Ammoniumgruppe oder den Rest eines primären oder sekundären Amins, welches sofern es aromatisch ist, z.B. durch $SO_3H$ oder COOH substituiert sein kann, steht,

$T_1$ für H oder einen Alkyl- oder substituierten Alkylrest mit bis zu 4 Kohlenstoffatomen steht,

R für einen Kohlenwasserstoff- oder substituierten Kohlenwasserstoffrest steht.

Beispiele für Kohlenwasserstoff- und substituierte Kohlenwasserstoffreste R sind gesättigte aliphatische Reste, wie z.B. Alkylenreste mit 1 bis 6 Kohlenstoffatomen, die substituiert sein können, beispielsweise durch OH, Phenyl und Benzyl; cycloaliphatische und aromatische Reste, wie z.B. Cyclohexylen und Phenylen, die substituiert sein können, beispielsweise durch F, Cl, Br, Alkyl, Alkoxy, $SO_3H$, $CO_2H$, $CF_3$ und $NO_2$; Naphthylenreste, die substituiert sein können, beispielsweise durch $SO_3H$ und $PO_3H_2$; und araliphatische Reste, wie z.B. $-C_6H_4.CH_2-$.

Beispiele für Alkyl- und substituierte Alkylreste R sind:

$C_1$-$C_4$-Alkylreste, wie z.B. n-Butyl, n-Propyl, Ethyl und Methyl; Hydroxyalkylreste, wie z.B. ß-Hydroxyethyl, ß-Hydroxypropyl, ß-Sulfatoethyl, $-CH_2-CH_2-PO_3H_2$ und ß-Cyanoethyl; und Alkoxyalkylreste, wie z.B. ß-Methoxypropyl, n-Ethoxyethyl und ß-Methoxyethyl.

Beispiele für Aminreste $T_2$ sind:

Methylamino, Ethylamino, n-Propylamino, Dimethylamino, Diethylamino, ß-Hydroxyethyl-amino, Di-(ß-hydroxyethyl) amino, Piperidino, Morpholino, ß-Methoxyethylamino, Carboxymethylamino, ß-Sulfoethylamino, N-Methyl-ß-sulfoethylamino, ß-Phosphonoethylamino, o-, m- und p-Sulfoanilino, N-Methyl-o-, -m- und -p-sulfoanilino, 2,4-, 2,5- und 3,5-Disulfoanilino, o-, m- und p-Carboxyanilino, und 5-Sulfo-2-carboxyanilino, 4- und 5-Sulfo-2-methyl-anilino, 4- und 5-Sulfo-2-methoxy-anilino, 4- und 5-Sulfo-2-chloroanilino, 2-, 5- und 8-Sulfo-1-naphthylamino, 1-, 4- und 3-Sulfo-2-naphthylamino, 1,5-, 4,8-, 5,7- und 6,8-Disulfo-2-naphthylamino sowie 3,8- und 4,8-Disulfo-1-naphthylamino.

Entsprechende Reaktivreste der letztgenannten Formel werden in der DE-OS 2 616 683 aufgeführt.

Besonders bevorzugte Reaktivreste Z sind folgende Vinylsulfon, ß-Chlorethylsulfon, ß-Sulfatoethylsulfon oder eine Gruppe, die unter den Formeln

$-(CH_2)_p-N(R^3)-V$ und $-NH-CO-N(R^3)-V$

ausgewählt ist, wobei

p = 0 bis 4,

$R^3$ die oben angegebene Bedeutung besitzt und

V = 2,3-Dichlorchinoxalinylcarbonyl, 1,4-Dichlorphthalazinylcarbonyl, Acryloyl, ß-substituierter Propionyl, Dichlorpyridazinyl, 5-Chlor-6-methyl-2-methylsulfonyl-pyrimidinyl-4-, substituiertes Dihalogenpyrimidinyl, Trihalogenpyrimidinyl, sowie Dichlortriazinyl und Monohalogentriazinyl, z.B. Monochlor- oder Monofluortriazinyl der Formel

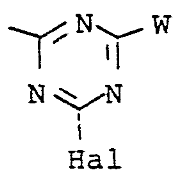

worin

Hal = F, Cl und

W = Alkoxy, Phenoxy, Alkylmercapto, Arylmercapto, Ammoniak, Alkylamin, Dialkylamin, cyclisches sekundäres Amin wie z.B. Morpholin, Arylamin, Alkylarylamin, wobei die Alkyl- und Arylreste zusätzlich z.B. auch durch $CO_2H$ oder $SO_3H$ substituiert sein können.

Als besonders bevorzugte Reaktivkomponenten der Formel Hal-Z (wobei Hal für ein Halogenatom steht) seien aufgeführt:

Acryloylchlorid, ß-Brompropionylbromid, 2,3-Dichlorchinoxalin-6-carbonylchlorid, 2,4-Dichlorchinoxalin-6-carbonylchlorid, 2,4-Dichlorchinoxalin-5-carbonylchlorid, ß-(4,5-Dichlorpyridazon-1-yl)-propionylchlorid, 1-(Phenyl-4'-carbonylchlorid)-4,5-dichlor-6-pyridazon, 2,4,6-Trichlorpyrimidin, 2,4,6-Tri(chlor- oder brom)-5-cyanpyrimidin, Tetrafluorcyclobutan-carbonylchlorid, Trifluorcyclobutan-carbonylchlorid, ß-(Tetrafluorcyclobutyl)-acryloylchlorid, 2,4,5,6-Tetrachlorpyrimidin, 2,4,5,6-Tetrafluorpyrimidin, 2,4,6-Tribrompyrimidin, 2,4,6-Trifluorpyrimidin, 2,4-Dichlor(bzw. Difluor)pyrimidin, 2,4,6-Trichlor-5-nitro(bzw. methyl, carbomethoxy, carboxymethyl, mono-, di- oder trichlormethyl, carboxy, sulfo, Cyano oder vinyl)-pyrimidin, 2,4-Difluor-6-methylpyrimidin, 2,6-Difluor-4-methyl-5-chlorpyrimidin, 2,4-Difluor-pyrimidin-5-ethylsulfon, 2,6-Difluor-4-chlorpyrimidin, 2,4,6-Trifluor-5-chlorpyrimidin, 2,6-Difluor-4-methyl-5-bromopyrimidin, 2,4,6-Trifluor-5-brompyrimidin, 2,4,6-Trifluor-5-chlormethylpyrimidin, 2,6-Difluor-5-methyl-4-chlorpyrimidin, 2,6-Difluor-5-chlorpyrimidin, 2,4,5-Trifluor-6-methylpyrimidin, 3-Phenylsulfonyl-3-chlorpropionylchlorid, 2,4-Difluor-5-trifluormethylpyrimidin, 2,4-Difluor-5-methylsulfonyl-pyrimidin,

2,4,6-Trifluor-5-methylsulfonylpyrimidin, 2,4-Dichlorpyrimidin-5-carbonsäurechlorid, 2,4,6-Trichlorpyrimidin-5-carbonsäurechlorid, 1,4-Dichlorphthalazin-6-carbonsäurehalogenid, 1,4-Dichlorphthalazin-6-sulfonsäurechlorid, 2-Chlorbenzthiazol-5-(bzw. 6)-carbonsäurehalogenid, 2-Chlorbenzoxazol-5(bzw. 6)-carbonsäurehalogenid, sowie Cyanurchlorid, Cyanurbromid oder 2,4,6-Trifluortriazin, sowie von letzteren deren primären Kondensationsprodukte mit Ammoniak, Aminen oder organischen Hydroxy- bzw. Mercaptoverbindungen, wie z.B. Methanol, Ethanol, sulfonierte Phenole, Phenol, 2-Mercaptobenzthiazol; primäre Alkylamine wie z.B. Methylamin, Ethylamin, n-Propylamin, ß-Hydroxyethylamin; sekundäre Amine wie z.B. Dimethylamin, Diethylamin, Di(ß-Hydroxyethyl)amin, Piperidin, Morpholin; ß-Methoxyethylamin; Anilin, N-Methylanilin, Toluidin, Anisidin, Anilin-o,m, oder p-Sulfonsäure, Anilin-2,5-, 2,4- oder 3,5-disulfonsäure, o, m, oder p-Aminobenzoesäure, ß-Aminoethansulfonsäure, N-Methylaminoethansulfonsäure, mono- oder di-Sulfonsäuren von 1-Amino- und 2-Aminonaphthalin.

Grundsätzlich ist die Anwesenheit zweier oder mehrerer voneinander verschiedener Reaktivgruppen im Farbstoff möglich.

Die Farbstoffe der Formel (I) werden vorteilhaft hergestellt, indem man Amine der Formel

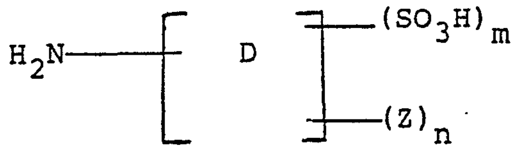

(II)

in welcher

D, Z, m und n die oben angegebene Bedeutung besitzen,

in bekannter Weise diazotiert und mit 3,6-Dioxo-1,2-dihydro-7H-pyrazolo/3,4-b/pyridinen der Formel

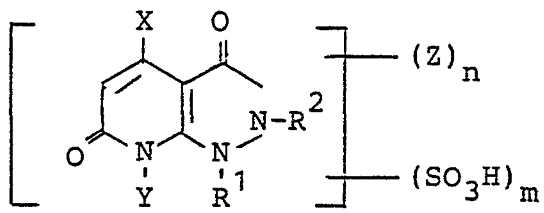

(III)

kuppelt, worin

m,n,X,Y,$R^1$,$R^2$ und Z die oben angegebene Bedeutung besitzen.

Als spezielle Beispiele der Amine der Formel (II), die keine faserreaktive Gruppe enthalten (n = O), seien genannt:

Anilin-2-, -3- und -4-sulfonsäure,
Anilin-2,5-, 2,4-, -3,5-disulfonsäure,
2-Aminophenol-4- oder -6-sulfonsäure,
4- oder 5-Sulfo-2-amino-benzoesäure,

2-Chloranilin-4-sulfonsäure,
4-Chloranilin-2-sulfonsäure,
4-Methoxy- oder 4-Ethoxyanilin-2-sulfonsäure,
6-Chlor-2-aminophenol-6- oder -4-sulfonsäure,
2-Aminophenol-4,6-disulfonsäure,
4-(Nitro-, Acetylamino- oder Methoxy)-anilin-2-sulfonsäure,
1-Naphthylamin-3-, -4-, -5-, -6-, -7- oder -8-sulfonsäure,
2-Aminonaphthalin-1-, -5-, -6-, -7- oder -8-sulfonsäure,
1-Naphthylamin-3,6,8- und -2,5,7-trisulfonsäure,
1-Naphthylamin-2,7-, -3,6-, -3,8-, -4,6-, -4,7-disulfonsäure,
2-Naphthylamin-1,5-, -3,7-, -4,8-, -5,7- und -6,8-disulfonsäure,
2-Naphthylamin-3,6,8-trisulfonsäure,
Anthranilsäure,
4-Aminophenol-2-carbonsäure,
4'-Amino-azobenzol-4-sulfonsäure,
4'-Amino-azobenzol-3',4-disulfonsäure,
4-Amino-azobenzol,
Anilin,
Toluidine,
Xylidine,
Monochloraniline,
2,5-, 2,4- und 3,4-Dichloranilin,
Anisidin,
Nitroaniline, Acylaminoaniline, Aminonaphthaline,
4-Aminophenyl-methylsulfon,

4-Amino-benzolsulfonamid.

Als spezielle Beispiele von Verbindungen, die mit einer Verbindung der Formel Z-Hal (wobei Hal = Halogenatom und Z die oben angegebene Bedeutung hat) umgesetzt werden, um Amine der Formel (II) zu erhalten, die eine faserreaktive Gruppe (n = 1) enthalten, seien genannt:

1,3-Phenylendiamin-4-sulfonsäure,
1,4-Phenylendiamin-2-sulfonsäure,
1,3-Phenylendiamin-4,6-disulfonsäure,
1,4-Phenylendiamin-3,6-disulfonsäure,
2,6-Diaminonaphthalin-4,8-disulfonsäure,
1-Amino-2-sulfo-5-aminomethyl-benzol,
1-Amino-2-sulfo-5-(N-methylaminomethyl)-benzol,
1-Amino-2-sulfo-5-(N-ethylaminomethyl)-benzol,
1-Amino-2-sulfo-5-(N-ß-sulfoethyl)aminomethyl-benzol,
1-Amino-3-(N-ß-sulfoethyl)aminomethyl-benzol,
2-Amino-5-aminomethyl-2-naphthalin-sulfonsäure,
2-Amino-5-aminomethyl-2,7-naphthalin-disulfonsäure,
4-Amino-benzylamin,
N-Methyl-4-amino-benzylamin,
1,3- und 1,4-Diaminobenzol (Monoacylverbindung),
4'-Amino-5-(N-methylaminomethyl)-2-azobenzolsulfonsäure,
4'-Amino-2'-(N-ß-sulfoethylaminomethyl)-4-azobenzolsulfonsäure,
4'-Amino-2'-(N-methylaminomethyl)-2,4-azobenzoldisulfonsäure,
7-Amino-2-(4-amino-3'-sulfophenyl)-2H-naphtho/1,2-d7-1,2,3-triazol-5,9-disulfonsäure,

Als spezielle Beispiele der Kupplungskomponenten der Formel (III), die keine faserreaktive Gruppe enthalten (n = 0), seien genannt:

4-Methyl(bzw. Carbmethoxy, Carbethoxy, Carboxy, Phenyl, Carbonamido, Sulfomethyl, Amino)-1,2-dihydro-3,6-dioxo-7H-pyrazolo/3,4-b/pyridin;
4-Methyl(bzw. Phenyl, Carbethoxy, Carboxy)-2-phenyl-1,2-dihydro-3,6-dioxo-7H-pyrazolo/3,4-b/pyridin;
4-Methyl(bzw. Phenyl, 4'-Sulfophenyl, 3'-Nitrophenyl, Carboxy, Carbonamido)-2-(4'-sulfophenyl)-1,2-dihydro-3,6-dioxo-7H-pyrazolo/3,4-b/pyridin;
4-Methyl(bzw. Phenyl, Carboxy)-1-phenyl-1,2-dihydro-3,6-dioxo-7H-pyrazolo/3,4-b/pyridin;
1,4-(bzw. 2,4-)Dimethyl-1,2-dihydro-3,6-dioxo-7H-pyrazolo/3,4-b/pyridin;
4-Methyl-1(bzw. 2)-(ß-hydroxymethyl)-1,2-dihydro-3,6-dioxo-7H-pyrazolo/3,4-b/pyridin;
4-Methyl-1(bzw. 2)-(3'-sulfolanyl)-1,2-dihydro-3,6-dioxo-7H-pyrazolo/3,4-b/pyridin;
4-Carboxy-2-(3'-sulfolanyl)-1,2-dihydro-3,6-dioxo-7H-pyrazolo/3,4-b/pyridin;
4-Carbethoxy-2-(3'-sulfolanyl)-1,2-dihydro-3,6-dioxo-7H-pyrazolo/3,4-b/pyridin;
7-Methyl(bzw. Ethyl, ß-Hydroxyethyl, ß-Sulfoethyl, Benzyl, Allyl)-4-methyl-1,2-dihydro-3,6-dioxo-pyrazolo/3,4-b/-pyridin;
4-Carboxy(bzw. Carbethoxy)-7-methyl-1,2-dihydro-3,6-dioxo-pyrazolo/3,4-b/pyridin;

4-Methyl(bzw. Carboxy, Carbethoxy)-7-phenyl-1,2-dihydro-3,6-dioxo-pyrazolo/3,4-b7pyridin;
1,4-(bzw. 2,4)-Dimethyl-7-phenyl-3,6-dioxo-pyrazolo-/3,4-b7pyridin;
4-Methyl-1,7(bzw. 2,7)-diphenyl-3,6-dioxo-pyrazolo-/3,4-b7pyridin;
4-Methyl-7-phenyl-2-(3'-sulfophenyl)-3,6-dioxo-1H-pyrazolo/3,4-b7pyridin;
4-Methyl-7-phenyl-2-(3'-sulfolanyl)-3,6-dioxo-1H-pyrazolo/3,4-b7pyridin;
4,7-Diphenyl-1,2-dihydro-3,6-dioxo-pyrazolo/3,4-b7-pyridin.

Als spezielle Beispiele von Verbindungen, die mit einer Verbindung der Formel Z-Hal (wobei Hal = Halogenatom und Z die oben angegebene Bedeutung hat) umgesetzt werden, um Kupplungskomponenten der Formel (III) herzustellen, die eine faserreaktive Gruppe (n = 1) enthalten, sollen erwähnt werden:

2-(4'- bzw. 3'-aminophenyl)-4-methyl-1,2-dihydro-3,6-dioxo-7H-pyrazolo/3,4-b7pyridin;
2-(4'- bzw. 3'-aminophenyl)-4-carboxy(bzw. carboxyethyl, phenyl)-1,2-dihydro-3,6-dioxo-7H-pyrazolo/3,4-b7pyridin;
4-(4'- bzw. 3'-aminophenyl)-1,2-dihydro-3,6-dioxo-7H-pyrazolo/3,4-b7pyridin;
4-(4'- bzw. 3'-aminophenyl)-2(bzw. 7)-phenyl-1,2-dihydro-3,6-dioxo-7H-pyrazolo/3,4-b7pyridin;
4-(4'- bzw. 3'-aminophenyl)-2-methyl(bzw. ß-hydroxyethyl, 4'-sulfophenyl, 3'-sulfolanyl)-1,2-dihydro-3,6-dioxo-7H-pyrazolo/3,4-b7pyridin;

7-(ß-Aminoethyl)-4-methyl(bzw. phenyl, carboxy)-1,2-dihydro-3,6-dioxo-pyrazolo/3,4-b/pyridin;
7-(ß-Aminoethyl)-4-methyl-2-phenyl(bzw. methyl, ß-hydroxyethyl, 3'-sulfolanyl)-3,6-dioxo-1H-pyrazolo/3,4-b/pyridin.

Die Pyrazolo/3,4-b/pyridone der allgemeinen Formel (III) sind zum Teil bekannt (Verbindungen der Formel III mit Y = H und n = O).

Herstellungsmethodik siehe z.B. Z. L. Imbach, R. Jacquier und J. L. Vidal, Bull. Soc. Chim. France 1970, 1929.
A. Dornow und M. Siebrecht, Chem. Ber. 93, 1106 (1960), Japan, Pat. 77, 135, 335 (1977).
R. Balicki, L. Kaczmarek und P. Nautkanamirski, Pol. J. Chem. 53, 2491 (1979).
Y. van Haverbeke, A. Maquestian und J.J. Van den Eynde, J. Heterocyclic Chem. 16, 773 (1979); Bull. Soc. Chim. Belg. 1978, 309).

Die vorliegende Erfindung betrifft auch neue Pyrazolo-/3,4-b/pyridone der Formel

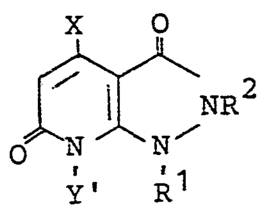

(IV)

worin

X = Wasserstoff, gegebenenfalls substituiertes Alkyl, gegebenenfalls substituiertes Aryl, $COOR^3$, $CON(R^3)_2$, $CONHR^3$, $NHR^3$, gegebenenfalls substituiertes Hetaryl,

Y' = gegebenenfalls substituiertes Alkyl, gegebenenfalls substituiertes Aryl, Alkenyl, OH, $NHCOR^3$ und wobei

$R^1$, $R^2$ und $R^3$ gleich oder verschieden sind und für Wasserstoff, gegebenenfalls substituiertes Alkyl, gegebenenfalls substituiertes Aryl, gegebenenfalls substituiertes Hetaryl, gegebenenfalls substituiertes Aralkyl, gegebenenfalls substituiertes Alkenyl oder Acyl stehen.

Besonders wichtige Pyrazolo/3,4-b/pyridone der Formel (IV) sind solche in denen X, Y', $R^1$, $R^2$ und $R^3$ die im folgenden aufgeführten Bedeutungen besitzen:

X = H, $CH_3$, $CH_2SO_3H$, Phenyl, 3(bzw. 4)-Nitrophenyl, 3(bzw. 4)-Aminophenyl, $CO_2H$, $CO_2CH_3$, $CO_2C_2H_5$, $CONHCH_3$, $CONHC_2H_5$, $CON(CH_3)_2$, $CON(C_2H_5)_2$, $CONHC_6H_5$, OH, $NH_2$,

Y = $CH_3$, $C_2H_5$, Allyl, ß-Hydroxyethyl, ß-Chlorethyl, ß-Sulfoethyl, Phenyl, Methylphenyl, Chlorphenyl, Benzyl, OH, $NHCOCH_3$, und

$R^1$ und $R^2$ gleich oder voneinander verschieden = H; $CH_3$, $C_2H_5$, ß-Hydroxyethyl, 3-Sulfolanyl, Phenyl, 2(3 oder 4)-Sulfophenyl, 3(bzw. 4)-Nitrophenyl, 3(bzw. 4)-Aminophenyl, $COCH_3$, $COC_6H_5$, $CH_2C_6H_5$.

Die Verbindungen der Formel (IV) sind dadurch erhältlich, daß man 3-Amino-5-pyrazolone der Formel

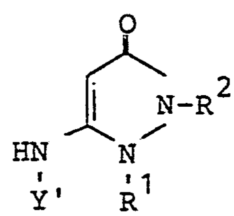

(V)

worin

Y', $R^1$ und $R^2$ die unter Formel (IV) angegebene Bedeutung besitzen,

unter sauren Reaktionsbedingungen und gegebenenfalls bei erhöhter Temperatur, wie z.B. in organischen Säuren (Eisessig, Propionsäure) oder verdünnten Mineralsäuren (Salzsäure, Schwefelsäure) unter Rückflußbedingungen, mit 1,3-Dicarbonylverbindungen der allgemeinen Formel (VI) bzw. Verbindungen der Formel (VII)

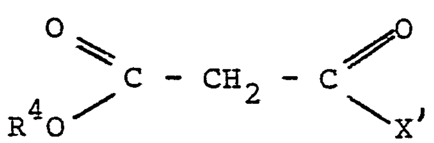

,

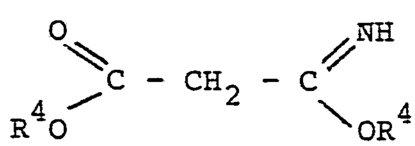

(VI) (VII)

worin

X' = H, Alkyl, substituiertes Alkyl, Aryl, substituiertes Aryl, Cl, $CO_2R^4$, $OR^4$ und

$R^4$ = $C_1$- bis $C_4$-Alkyl, umsetzt.

Für die Darstellung der substituierten 3-Aminopyrazolone der Formel (V) sind eine Reihe von Darstellungsverfahren in der Literatur beschrieben: siehe z.B. in Weissberger und Porter, J. Am. Chem. Soc. 65, 732 (1943); Französische Patentschriften 1 469 360 und 1 555 513; US-Patentschriften 2 803 544 und 2 927 928, Niederländische Patentschrift 6 513 316, DE-OS 2 015 814.

Eine weitere Möglichkeit zur Darstellung der Aminopyrazolone der Formel (V) besteht in der Umsetzung der Halogenverbindungen der Formel (VIII) mit Aminen der Formel (IX)

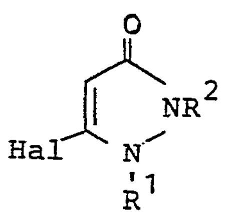

(VIII)

$Y'-NH_2$

(IX)

worin

Hal = Cl, Br und

Y', $R^1$ und $R^2$ die unter Formel (IV) genannte Bedeutung besitzen.

Die Reaktion wird am geeignetsten in einem inerten Lösungsmittel oder auch ohne Lösungsmittel bei erhöhter Temperatur (50-200°C), gegebenenfalls unter Druck im Autoklaven durchgeführt.

Als individuelle Verbindungen der Formel (IV) seien aufgeführt:

7-Methyl(bzw. Ethyl, ß-Hydroxyethyl, ß-Sulfoethyl, Benzyl, Allyl, Phenyl)-1,2-dihydro-1H-pyrazolo/3,4-b/pyridin-3,6-dion;
7-Methyl(bzw. Ethyl, ß-Hydroxyethyl, ß-Sulfoethyl, Benzyl, Allyl)-4-methyl-1,2-dihydro-1H-pyrazolo/3,4-b/pyridin-3,6-dion;
7-Methyl(bzw. Ethyl, Benzyl)-4-carboxy(bzw. Carbethoxy)-1,2-dihydro-1H-pyrazolo/3,4-b/pyridin-3,6-dion;
7-Methyl(bzw. Ethyl, ß-Sulfoethyl, Benzyl, Allyl)-4-phenyl-(bzw. chlor-, nitro- oder aminosubstituiertes phenyl)-1,2-dihydro-1H-pyrazolo/3,4-b/pyridin-3,6-dion;
4-Methyl(bzw. Carboxy, Carbethoxy)-7-phenyl(bzw. chlor-, alkoxy-, nitro-, amino-, acylamino-, sulfo-substituiertes phenyl)-1,2-dihydro-1H-pyrazolo/3,4-b/pyridin-3,6-dion;
4-Hydroxy-7-methyl(bzw. benzyl, phenyl, ethyl)-1,2-dihydro-1H-pyrazolo/3,4-b/pyridin-3,6-dion;

1,4(bzw. 2,4)-Dimethyl-7-phenyl(bzw. methyl, ethyl, benzyl)-pyrazolo/3,4-b/pyridin-3,6-dion;
4-Methyl-1,7(bzw. 2,7)-diphenyl-pyrazolo/3,4-b/pyridin-3,6-dion;
4-Methyl-7-phenyl-2-(3'-sulfophenyl)-1H-pyrazolo/3,4-b/--pyridin-3,6-dion;
4-Methyl-7-benzyl-2-(3'- bzw. 4'-sulfophenyl)-1H-pyrazolo/3,4-b/pyridin-3,6-dion;
4-Methyl-7-phenyl-2-(3'-sulfolanyl bzw. ß-Hydroxyethyl)-1H-pyrazolo/3,4-b/pyridin-3,6-dion;
4,7-Diphenyl-1,2-dihydro-1H-pyrazolo/3,4-b/pyridin-3,6-dion;
4-(4'- bzw. 3'-nitrophenyl)-7-phenyl-1,2-dihydro-1H-pyrazolo/3,4-b/pyridin-3,6-dion;
7-(ß-Aminoethyl)-4-methyl(bzw. phenyl, carboxy)-1,2-dihydro-1H-pyrazolo/3,4-b/pyridin-3,6-dion;
7-(ß-Aminoethyl)-4-methyl-2-phenyl-1H-pyrazolo/3,4-b/-pyridin-3,6-dion;
7-Methyl(bzw. Ethyl, ß-Hydroxyethyl, Benzyl, ß-Sulfoethyl)-4-methyl-2-phenyl-1H-pyrazolo/3,4-b/pyridin-3,6-dion;
7-Methyl(bzw. Ethyl, ß-Hydroxyethyl)-4-methyl-2-(3'- bzw. 4'-sulfophenyl)-1H-pyrazolo/3,4-b/pyridin-3,6-dion;
7-Methyl(bzw. Benzyl, Phenyl)-4-carboxy-2-phenyl-1H-pyrazolo/3,4-b/pyridin-3,6-dion;
4-Hydroxy-7-(methyl bzw. benzyl, phenyl)-2-phenyl-1H-pyrazolo/3,4-b/pyridin-3,6-dion.

Die Verwendungsmöglichkeiten der Pyrazolo/3,4-b/pyridin-3,6-dione der Formel (IV) können wie folgt zusammengefaßt werden: Zwischen- und Endprodukte z.B. auf dem Gebiet der Pflanzenschutzmittel, der Pharmazeutika, der Fotomaterialien und der Farbstoffe speziell als Kupplungskomponenten zur Herstellung neuer Azofarbstoffe.

Die Azofarbstoffe der allgemeinen Formel (I) sind sehr gut geeignet zum Färben und Bedrucken von hydroxylgruppen- oder amidgruppenhaltigen Fasermaterialien sowie von synthetischen Fasern, insbesondere Polyesterfasern.

Azoreaktivfarbstoffe der Formel (I) mit $n \neq 0$ eignen sich besonders gut zum Färben und Bedrucken von Polyamid- und Zellulosetextilmaterialien. Wasserlösliche Azofarbstoffe der Formel (I) mit $n = 0$ finden Verwendung zum Färben von Wolle, synthetischen Polyamidfasern und Leder sowie zum Substantivfärben von Zellulosematerialien, wie Baumwolle und Papier.

Wasserunlösliche Verbindungen der Formel (I) mit $m = n = 0$ finden als Pigmente Verwendung.

Beispiel 1

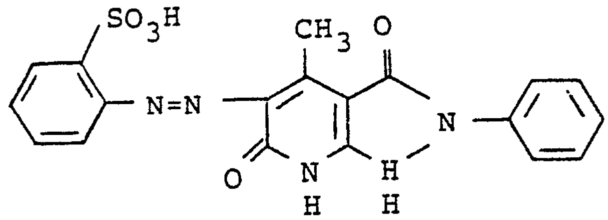

50 g 2-Amino-benzolsulfonsäure werden in 400 ml Wasser/ 200 g Eis und 80 ml Salzsäure in bekannter Weise mit 70 ml 30 %iger Nitritlösung diazotiert. Der Nitritüberschuß wird durch Zugabe von Amidosulfonsäure zerstört, und die Reaktionsmischung zu einer Lösung von 70 g 4-Methyl-2-phenyl-1,2-dihydro-7H-pyrazolo/3,4-b/pyridin-3,6-dion in 600 ml Wasser/300 ml 20 %iger Sodalösung langsam zugegeben. Die Farbstoffmischung wird 1 Stunde gerührt und dann abgesaugt. Nach dem Trocknen bei 60°C werden 131 g eines dunkelbraunen Farbstoffpulvers erhalten, das Wolle und synthetische Polyamidfasern in diversen braunen Tönen mit hervorragenden Echtheiten und hoher Ergiebigkeit färbt ( $\lambda$ max. = 435 nm ($H_2O$)).

Die Darstellung der Kupplungskomponente erfolgt durch Umsetzung von 17,5 g 1-Phenyl-3-amino-5-pyrazolon mit 130 g Acetessigsäureethylester in 1,5 l Eisessig. Nach mehrstündigem Kochen unter Rückfluß (ca. 4 Stunden) kühlt man ab und isoliert nach Absaugen und Trocknen 192 g 4-Methyl-2-phenyl-1,2-dihydro-7H-pyrazolo/3,4-b/-pyridin-3,6-dion vom Schmp. > 300°C (Zers.).

Eine andere Variante ist die Umsetzung von 175 g 1-Phenyl-3-amino-5-pyrazolon mit 140 g Acetessigester in 350 ml

halbkonzentrierter Salzsäure. Nach 1-stündigem Erwärmen auf 100°C, kühlt man ab, fügt 500 ml Wasser zu und stellt mit Natronlauge auf pH 4. Es wird abgesaugt, mit 200 ml Wasser nachgewaschen und getrocknet. Die Ausbeute an 4-Methyl-2-phenyl-1,2-dihydro-7H-pyrazolo/3,4-b/pyridin-3,6-dion beträgt 190 g.

Verwendet man an Stelle der in Beispiel 1 genannten 2-Aminobenzolsulfonsäure andere gängige Diazokomponenten (Anilin-Derivate) und setzt auch verschieden substituierte Pyrazolo/3,4-b/pyridin-3,6-dione ein, so werden folgende farbstarken Farbstoffe erhalten:

Tabelle 1

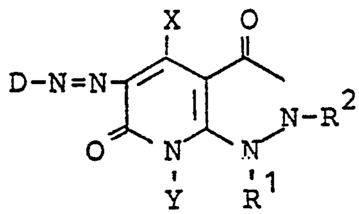

| Bsp. | D | X | Y | $R^1$ | $R^2$ | Farbton ($\lambda$max) |
| --- | --- | --- | --- | --- | --- | --- |
| 2 | 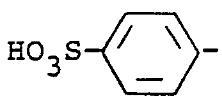 | $CH_3$ | H | H | $C_6H_5$ | olivbraun (438 nm) |
| 3 | 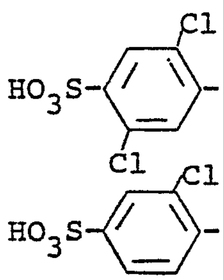 | " | " | " | " | oliv |
| 4 | | " | " | " | " | oliv |
| 5 | 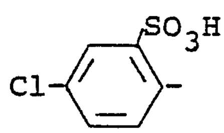 | " | " | " | " | olivbraun (431 nm) |
| 6 | 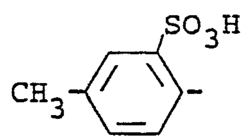 | " | " | " | " | olivbraun |
| 7 | 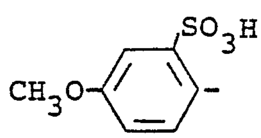 | " | " | " | " | orangebraun |
| 8 | 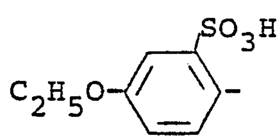 | " | " | " | " | orangebraun (452 nm) |

Tabelle 1 (Fortsetzung)

| Bsp. | D | X | Y | $R^1$ | $R^2$ | Farbton ($\lambda$ max.) |
|---|---|---|---|---|---|---|
| 9 | 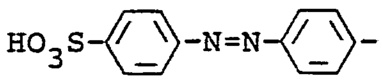 | $CH_3$ | H | H | $C_6H_5$ | rotst. dkl. braun (443 nm) |
| 10 | 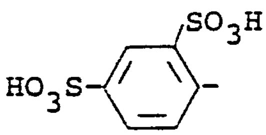 | " | " | " | " | olivbraun (434 nm) |
| 11 | 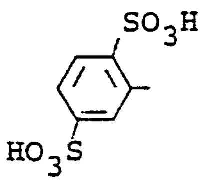 | " | " | " | " | olivbraun (435 nm) |
| 12 | 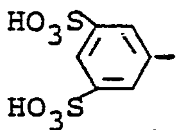 | " | " | " | " | olivbraun |
| 13 | 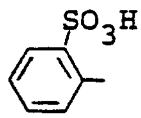 | $CH_3$ | $CH_3$ | H | $C_6H_5$ | olivbraun |
| 14 | " | $CH_3$ | $C_2H_5$ | H | $C_6H_5$ | olivbraun |
| 15 | " | $CH_3$ | $CH_2-C_6H_5$ | H | $C_6H_5$ | olivbraun |
| 16 | " | $CH_3$ | H | H | H | orangebraun |
| 17 | " | $CO_2H$ | H | H | $C_6H_5$ | olivbraun |
| 18 | " | $CO_2H$ | H | H | H | olivbraun |

Tabelle 1 (Fortsetzung)

| Bsp. | D | X | Y | $R^1$ | $R^2$ | Farbton ($\lambda$max) |
|---|---|---|---|---|---|---|
| 19 | 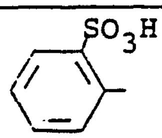 | $CH_3$ | $C_6H_5$ | H | H | gelb-braun |
| 20 | " | $C_6H_5$ | H | H | H | oliv-braun |
| 21 | " | $CH_3$ | p-$C_6H_4$-$OCH_3$ | H | $C_6H_5$ | gelb-braun |
| 22 | 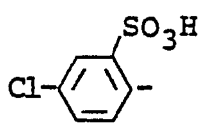 | $CH_3$ | $CH_3$ | H | $C_6H_5$ | oliv-braun |
| 23 | " | $CH_3$ | $C_2H_5$ | H | $C_6H_5$ | oliv-braun |
| 24 | " | $CH_3$ | $CH_2$-$C_6H_5$ | H | $C_6H_5$ | oliv-braun |
| 25 | " | $CH_3$ | H | $CH_3$ | H | oliv-braun |
| 26 | " | $CH_3$ | H | H | $CH_2$-$CH_2$-OH | oliv-braun (454 nm) |
| 27 | " | $CH_3$ | H | H | 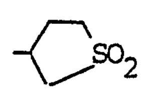 | oliv-braun |

Tabelle 1 (Fortsetzung)

| Bsp. | D | X | Y | $R^1$ | $R^2$ | Farbton ($\lambda$ max) |
|---|---|---|---|---|---|---|
| 28 | 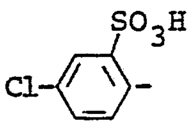 | $CO_2H$ | H | H | $C_6H_5$ | rotst. braun (445 nm) |
| 29 | " | $CH_3$ | $C_6H_5$ | H | H | gelb-braun (438 nm) |
| 30 | " | $CH_3$ | p $-C_6H_4-OCH_3$ | H | $C_6H_5$ | gelb-braun |
| 31 | 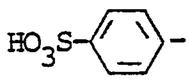 | $CH_3$ | $C_2H_5$ | H | $C_6H_5$ | oliv-braun (431 nm) |
| 32 | " | $CH_3$ | $CH_2-C_6H_5$ | H | $C_6H_5$ | oliv-braun |
| 33 | " | $CO_2H$ | H | H | $C_6H_5$ | rotst. braun (437 nm) |
| 34 | " | $CH_3$ | $C_6H_5$ | H | H | gelb-braun (412 nm) |
| 35 | 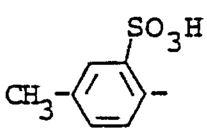 | $CH_3$ | $C_2H_5$ | H | $C_6H_5$ | braun |
| 36 | " | $CH_3$ | $CH_2-C_6H_5$ | H | $C_6H_5$ | braun |

Tabelle 1 (Fortsetzung)

| Bsp. | D | X | Y | $R^1$ | $R^2$ | Farbton ($\lambda$ max) |
|---|---|---|---|---|---|---|
| 37 | 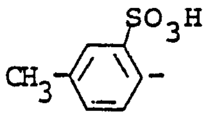 | $CH_3$ | $CH_2-C_6H_5$ | H | H | gelbbraun |
| 38 | " | $CH_3$ | $C_6H_5$ | H | H | rotbraun |
| 39 | 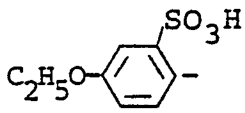 | $CH_3$ | $CH_3$ | H | $C_6H_5$ | rotbraun |
| 40 | " | $CH_3$ | $CH_2-C_6H_5$ | H | $C_6H_5$ | rotbraun |
| 41 | " | $CH_3$ | $CH_2-C_6H_5$ | H | H | orangebraun |
| 42 | " | $CH_3$ | $C_6H_5$ | H | H | braunrot (483 nm) |
| 43 | " | $CO_2H$ | H | H | $C_6H_5$ | rotbraun |
| 44 | " | $CH_3$ | H | H | 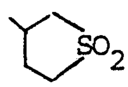 | rotbraun |
| 45 | 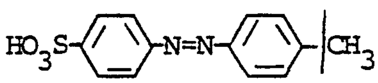 | $CH_3$ | $C_2H_5$ | H | $C_6H_5$ | dkl. braun |
| 46 | " | $CH_3$ | $C_2H_5$ | H | H | rotbraun |
| 47 | " | $CH_3$ | H | H | H | rotbraun |
| 48 | " | $CH_3$ | $C_6H_5$ | H | H | rotbraun |

Tabelle 1 (Fortsetzung)

| Bsp. | D | X | Y | $R^1$ | $R^2$ | Farbton ($\lambda$ max) |
|---|---|---|---|---|---|---|
| 49 | 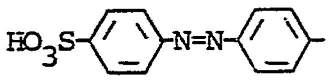 | $CO_2H$ | H | H | $C_6H_5$ | violett-braun |
| 50 | " | $C_6H_5$ | H | H | $C_6H_5$ | rotst. dkl. braun |
| 51 | 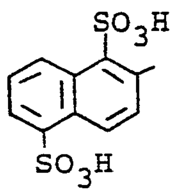 | $CH_3$ | H | H | $C_6H_5$ | dkl. braun (452 nm) |
| 52 | " | $CH_3$ | $C_2H_5$ | H | $C_6H_5$ | dkl. braun |
| 53 | " | $CH_3$ | $C_6H_5$ | H | H | rotst. dkl. braun (447 nm) |
| 54 | " | $CH_3$ | H | H | 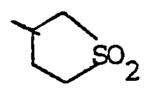 | rotst. braun (451 nm) |
| 55 | 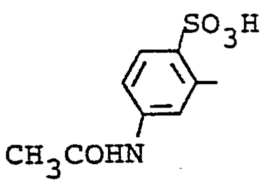 | $CH_3$ | H | H | $C_6H_5$ | dkl. braun |
| 56 | " | $CH_3$ | $C_2H_5$ | H | $C_6H_5$ | dkl. braun |
| 55 | " | $CH_3$ | $C_2H_5$ | H | $C_6H_5$ | rotst. braun |
| 56 | " | $CH_3$ | $C_6H_5$ | H | $C_6H_5$ | rotst. braun |

Tabelle 1 (Fortsetzung)

| Bsp. | D | X | Y | $R^1$ | $R^2$ | Farbton ($\lambda$ max) |
|---|---|---|---|---|---|---|
| 57 | 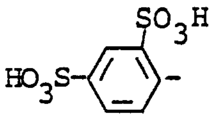 | $CH_3$ | $C_2H_5$ | H | $C_6H_5$ | olivbraun |
| 58 | " | $CH_3$ | $C\ H_2-C_6H_5$ | H | $C_6H_5$ | olivbraun |
| 59 | " | $CH_3$ | $CH_2-C_6H_5$ | H | $C_6H_5$ | olivbraun |
| 60 | " | $CH_3$ | H | H | 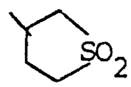 | olivbraun |
| 61 | 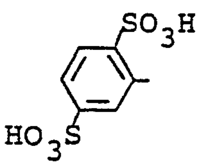 | $CH_3$ | $C_2H_5$ | H | $C_6H_5$ | olivbraun |
| 62 | " | $CH_3$ | $CH_2-C_6H_5$ | H | $C_6H_5$ | olivbraun |
| 63 | " | $CH_3$ | $p-C_6H_4-OCH_3$ | H | $C_6H_5$ | braun |
| 64 | 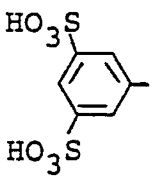 | $CH_3$ | $C_2H_5$ | H | $C_6H_5$ | olivbraun |
| 65 | " | $CH_3$ | $p-C_6H_4-OCH_3$ | H | $C_6H_5$ | braun |
| 66 | 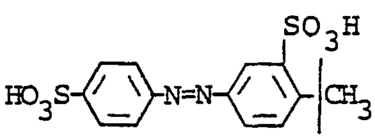 | $CH_3$ | H | H | $C_6H_5$ | dkl. braun (452 nm) |
| 67 | " | $CH_3$ | $CH_3$ | H | $C_6H_5$ | dkl. braun |
| 68 | " | $CO_2H$ | H | H | $C_6H_5$ | rotst.dkl. braun |

Die Farbstoffbeispiele aus Tabelle 1 finden vorwiegend Verwendung zum Färben von Wolle und synthetischen Polyamidfasern.

Die Beispiele 10 bis 12, 51 bis 54 und 57 bis 68 eignen sich speziell auch zum Färben von Leder in braunen Tönen, wobei besonders farbstarke und lichtechte Färbungen resultieren.

Mit den Beispielen 66 bis 68 sind auch Färbungen auf Baumwolle möglich.

Die in Tabelle 1 aufgeführten verschiedenen Kupplungskomponenten sind alle nach dem in Beispiel 1 genannten Verfahren darstellbar, so z.B.
2-Phenyl-1,2-dihydro-7H-pyrazolo[3,4-b]pyridin-3,6-dion-4-carbonsäure (Schmp. 302-304°C) durch mehrstündiges Kochen von 1-Phenyl-3-amino-5-pyrazolon mit überschüssigem Oxalessigester in halbkonzentrierter Salzsäure, oder
2,4-Diphenyl-1,2-dihydro-7H-pyrazolo[3,4-b]pyridin-3,6-dion (Schmp. 278-280°C) durch mehrstündiges Kochen von 1-Phenyl-3-amino-5-pyrazolon mit äquimolaren Mengen an Benzoylessigester in Eisessig, bzw.
4-Methyl-7-phenyl-1,2-dihydro-pyrazolo[3,4-b]pyridin-3,6-dion (Schmp. 287°C)
durch mehrstündiges Kochen von 3-Anilino-5-pyrazolon mit äquimolaren Mengen an Acetessigester in Eisessig. (Die Strukturen dieser Verbindungen sind durch spektroskopische und analytische Daten abgesichert).

Beispiel 69

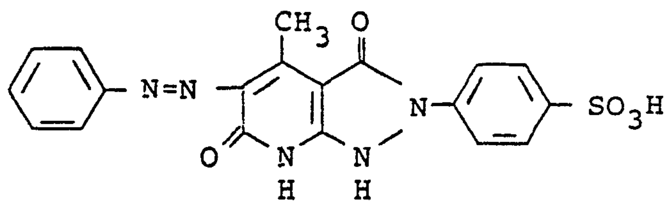

13,5 g Anilin werden in der üblichen Weise bei 0-5°C diazotiert, und die resultierende Diazoniumsalzlösung in eine Lösung aus 46,5 g 4-Methyl-2-(4'-sulfophenyl)-1,2-dihydro-7H-pyrazolo/3,4-b/pyridin-3,6-dion in 300 ml Wasser/200 ml 20 %iger Sodalösung bei Raumtemperatur eingetragen. Nach der Zugabe wird noch 30 Minuten lang nachgerührt, mit 50 g Kochsalz ausgesalzen und dann abgesaugt. Nach dem Trocknen bei 60-70°C erhält man 81 g eines salzhaltigen dunkelbraunen Farbstoffs, der Wolle und synthetische Polyamidfasern olivbraun färbt ( $\lambda$ max. = 432 nm ($H_2O$)).

Die Darstellung der sulfogruppenhaltigen Kupplungskomponente geschieht wie folgt:

241 g 4-Methyl-2-phenyl-1,2-dihydro-7H-pyrazolo/3,4-b/-pyridin-3,6-dion werden in 500 ml Chlorsulfonsäure so eingetragen, daß die Temperatur 50°C nicht übersteigt. Unter Rühren erwärmt man anschließend für 2 Stunden auf 50-60°C, kühlt die Reaktionsmischung ab und trägt auf 1,5 kg Eis aus. Nach 2 Stunden Rühren saugt man den ausgefallenen Niederschlag ab und trocknet bei 50°C im

Vakuum. Es werden 305 g 4-Methyl-2-(4-sulfophenyl)-1,2-dihydro-7H-pyrazolo/3,4-b/pyridin-3,6-dion isoliert (Zers. P. > 250°C).

Zum gleichen Ergebnis gelangt man, wenn man das 4-Methyl-2-phenyl-1,2-dihydro-7H-pyrazolo/3,4-b/pyridin-3,6-dion in Schwefelsäure-monohydrat mit 65 %igem Oleum bei 100-130°C sulfiert.

Verwendet man anstelle des in Beispiel 69 genannten Anilins andere Diazokomponenten und als Kupplungskomponente auch 7-substituierte sulfonsäuregruppenhaltige Pyrazolo-/3,4-b/pyridin-3,6-dione, so gelangt man zu folgenden farbstarken Farbstoffen:

Tabelle 2

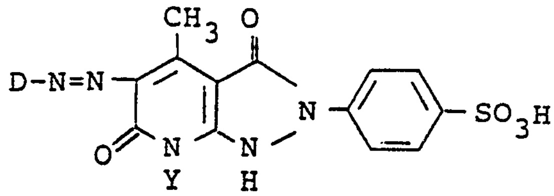

| Bsp. | D | Y | Farbton ($\lambda$ max. ($H_2O$)) |
|---|---|---|---|
| 70 | 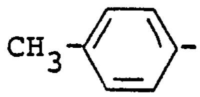 | H | braun |
| 71 | 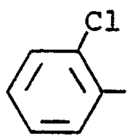 | H | olivbraun |
| 72 | 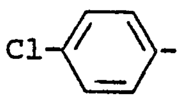 | H | olivbraun |
| 73 | 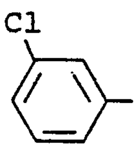 | H | olivbraun |
| 74 | 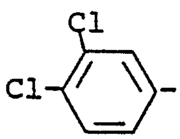 | H | oliv (424 nm) |
| 75 | 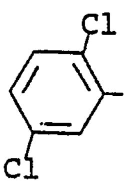 | H | oliv |
| 76 | 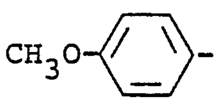 | H | rotst. braun |

Tabelle 2 (Fortsetzung)

| Bsp. | D | Y | Farbton ($\lambda$ max ($H_2O$)) |
|---|---|---|---|
| 77 | 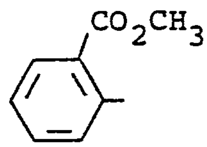 | H | olivbraun |
| 78 | 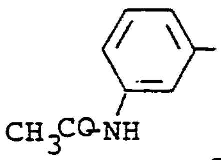 | H | orangebraun |
| 79 | 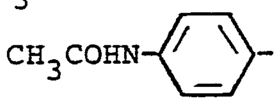 | H | rotst. braun |
| 89 | 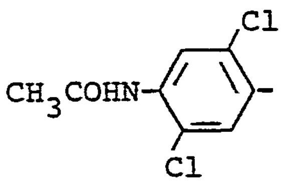 | H | braun |
| 81 | 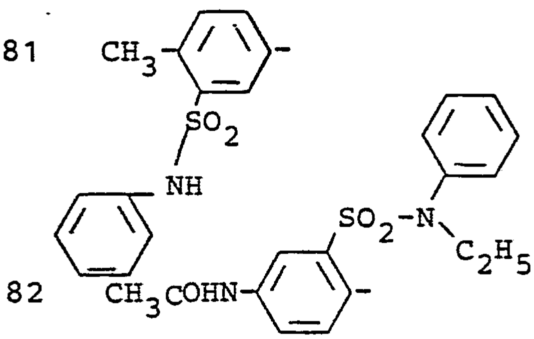 | H | olivbraun |
| 82 | | H | braun |
| 83 | 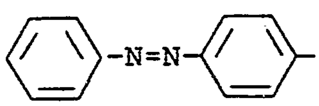 | H | dkl. braun (465 nm) |
| 84 | 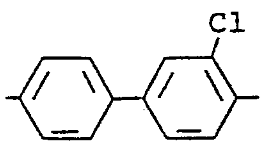<br>(bifunktionell) | H | braun |

Tabelle 2 (Fortsetzung)

| Bsp. | D | Y | Farbton |
|---|---|---|---|
| 85 | 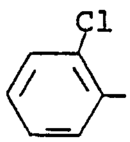 | $CH_3$ | olivbraun |
| 86 | " | $CH_2-C_6H_5$ | olivbraun |
| 87 | 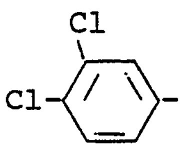 | $C_2H_5$ | olivbraun |
| 88 | 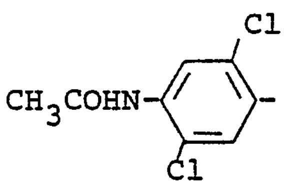 | $C_2H_5$ | orangebraun |
| 89 | " | $CH_2-C_6H_5$ | orangebraun |
| 90 | 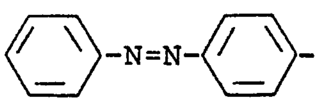 | $CH_3$ | dkl. braun |
| 91 | 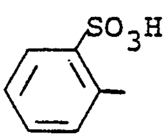 | H | olivbraun |
| 92 | 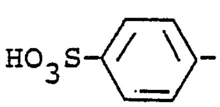 | H | olivbraun |

Tabelle 2 (Fortsetzung)

| Bsp. | D | Y | Farbton |
|---|---|---|---|
| 93 | 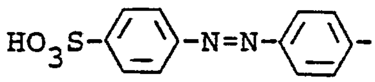 | H | dkl. braun |
| 94 | 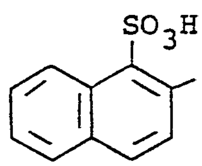 | H | rotst. braun |

Die in Tabelle 2 aufgeführten Farbstoffe finden Verwendung zum Färben von polyamidgruppenhaltigen Textilmaterialien, insbesondere von Wolle und Leder.

Beispiel 95

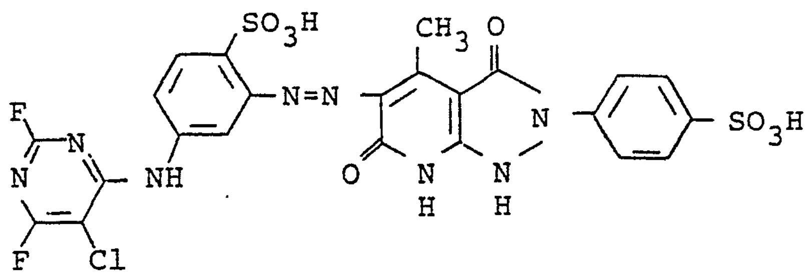

Variante A:

5,5 g 2,4-Diaminobenzolsulfonsäure werden in 200 ml Wasser bei pH 7 und 15°C mit 5,0 g 2,4,6-Trifluor-5-chlor-pyrimidin umgesetzt. Durch Zugabe von verdünnter Natronlauge wird der pH der Reaktionsmischung dabei konstant auf pH 7 gehalten. Es wird 2 Stunden bei Raumtemperatur gerührt und dann durch Zugabe von Eis auf 0°C abgekühlt. Man versetzt mit 4 ml Salzsäure, wobei sich ein pH von 3 einstellt, und diazotiert mit 7 ml 30 %iger Natriumnitritlösung. Nach 30 Minuten Rühren bei 0-5°C entfernt man den Nitritüberschuß und fügt diese Diazoniumsalzmischung langsam zu einer Lösung aus 9,3 g 4-Methyl-2-(4'-sulfophenyl)-1,2-dihydro-7H-pyrazolo/3,4-b/pyridin-3,6-dion in 100 ml Wasser/40 ml Sodalösung. Man rührt noch 30 Minuten lang nach, salzt mit 25 g Kochsalz aus, saugt ab und trocknet bei 40°C. Es werden 20,3 g eines dunkelbraunen Reaktivfarbstoffpulvers isoliert, das cellulosehaltiges Textilmaterial in gelbstichig braunen Tönen färbt ($\lambda$ max = 437 nm ($H_2O$)).

Variante B:

Eine Suspension von diazotierter 4-Acetylamino-2-amino-benzolsulfonsäure (6,8 g) in 200 ml Wasser wird langsam zu einer Lösung von 9,3 g 4-Methyl-2-(4-sulfophenyl)-1,2-dihydro-7H-pyrazolo/3,4-b/pyridin-3,6-dion in 100 ml Wasser/40 ml Sodalösung zulaufen lassen. 30 Minuten nach Zugabe stellt man die Farbstoffmischung durch Versetzen mit Salzsäure stark sauer und erwärmt für 1-2 Stunden auf 90-95°C. Nach dem Abkühlen erhöht man den pH durch Zugabe von konzentrierter Natronlauge auf pH 7, fügt 100 g Eis zu und setzt mit 5,0 g 2,4,6-Trifluor-5-chlor-pyrimidin um. Dabei hält man den pH der Mischung durch Zugabe von verdünnter Natronlauge konstant zwischen 6 und 6,5. Es wird weitere 2 Stunden gerührt und mit 25 g Kochsalz ausgesalzen. Die Ausbeute an braunem Reaktivfarbstoff beträgt 19,5 g.

In analoger Reaktionsführung sind eine Reihe von vergleichbaren Reaktivfarbstoffen zugänglich, wenn man unter Verwendung der in nachfolgender Tabelle aufgeführten Reaktiv-, Diazo- und Kupplungskomponenten verfährt.

Die Farbstoffe in Tabelle 3 finden vornehmlich Verwendung zum Färben und Bedrucken von cellulosehaltigem Textilmaterial.

Tabelle 3

| Bsp. | Reaktivkomponente | Diazokomponente | Kupplungskomponente 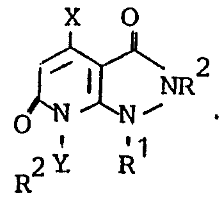 X | Y | $R^1$ | $R^2$ | Farbton ($\lambda$ max) |
|---|---|---|---|---|---|---|---|
| 96 | 5-Chlor-2,4,6-tri-fluorpyrimidin | 2,4-Diamino-benzol-sulfonsäure | $CH_3$ | $C_2H_5$ | H | $p-C_6H_4SO_3H$ | olivbraun |
| 97 | " | " | $CH_3$ | $CH_2-C_6H_5$ | H | $p-C_6H_4SO_3H$ | olivbraun |
| 98 | " | " | $CO_2H$ | H | H | $C_6H_5$ | braun (450 nm) |
| 99 | " | " | $CO_2H$ | H | H | H | braun (439 nm) |
| 100 | " | " | $CH_3$ | H | H | $CH_2-CH_2-OH$ | olivbraun |
| 101 | " | 2,5-Diaminobenzol-sulfonsäure | $CH_3$ | H | H | $p-C_6H_4-SO_3H$ | rotstichig braun |
| 102 | " | " | $CO_2H$ | H | H | $C_6H_5$ | rotbraun (453 nm) |
| 103 | " | 2,4-Diamino-1,5-benzoldisulfon-säure | $CH_3$ | H | H | $C_6H_5$ | olivbraun |
| 104 | " | " | $CH_3$ | $C_2H_5$ | H | $p-C_6H_4-SO_3H$ | olivbraun |
| 105 | " | " | $CH_3$ | H | H | H | olivbraun |
| 106 | " | " | $CO_2H$ | H | H | $C_6H_5$ | braun |
| 107 | " | 2,5-Diamino-1,4-benzoldisulfon-säure | $CH_3$ | H | H | $C_6H_5$ | rotst. braun (452 nm) |
| 108 | " | " | $CH_3$ | $C_2H_5$ | H | $C_6H_5$ | rotst. braun (452 nm) |
| 109 | " | " | $CH_3$ | H | H | $p-C_6H_4-SO_3H$ | rotst. braun (452 nm) |

Tabelle 2 (Fortsetzung)

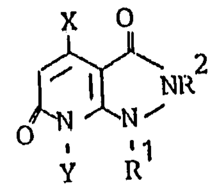

| Bsp. | Reaktivkomponente | Diazokomponente | Kupplungskomponente X | Y | $R^1$ | $R^2$ | Farbton (λ max) |
|---|---|---|---|---|---|---|---|
| 110 | 5-Chlor-2,4,6-trifluorpyrimidin | 2-Amino-4-(N'-methylaminomethyl)-benzolsulfonsäure | $CH_3$ | H | H | p-$C_6H_4$-$SO_3H$ | olivbraun |
| 111 | " | " | $CH_3$ | $CH_2$-$C_6H_5$ | H | p-$C_6H_4$-$SO_3H$ | olivbraun |
| 112 | " | " | $CO_2H$ | H | H | $C_6H_5$ | braun (447 nm) |
| 113 | " | 2-Amino-5-aminomethyl-1-naphthalin-sulfonsäure | $CH_3$ | H | H | p-$C_6H_4$-$SO_3H$ | braun |
| 114 | " | 2-Amino-5-aminomethyl-1,7-naphthalindisulfonsäure | $CH_3$ | H | H | $C_6H_5$ | braun |
| 115 | " | " | $CH_3$ | H | H | p-$C_6H_4$-$SO_3H$ | braun |
| 116 | " | 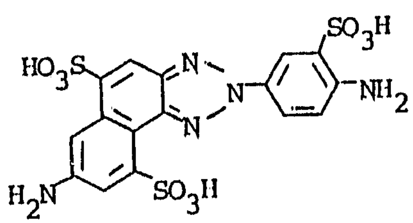 | $CH_3$ | H | H | H | rotbraun (458 nm) |
| 117 | " | " | $CO_2H$ | H | H | $C_6H_5$ | rotbraun |
| 118 | " | " | $CH_3$ | H | H | p-$C_6H_4$-$SO_3H$ | rotstichig braun |

Tabelle 3 (Fortsetzung)

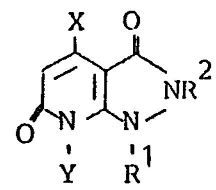

| Bsp. | Reaktivkomponente | Diazokomponente | Kupplungskomponente X | Y | $R^1$ | $R^2$ | Farbton ($\lambda$ max) |
|---|---|---|---|---|---|---|---|
| 119 | 5-Chlor-2,6-difluor-4-methylpyrimidin | 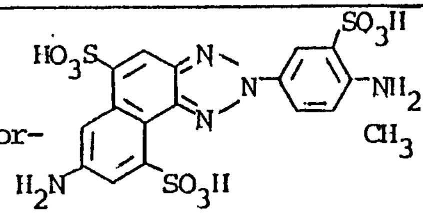 | $CH_3$ | H | H | $p-C_6H_4-SO_3H$ | rotstichig braun |
| 120 | " | 2,4-Diamino-benzol-sulfonsäure | $CH_3$ | H | H | $p-C_6H_4-SO_3H$ | oliv braun (437 nm) |
| 121 | " | " | $CH_3$ | $C_2H_5$ | H | $p-C_6H_4-SO_3H$ | oliv braun |
| 122 | " | " | $CH_3$ | H | H | $p-C_6H_4-SO_3H$ | rotst. braun (454 nm) |
| 123 | " | " | $CO_2H$ | H | H | $C_6H_5$ | rotst. braun |
| 124 | " | 2,5-Diamino-1,4-benzoldisulfonsäure | $CH_3$ | H | H | $C_6H_5$ | rotst. braun |
| 125 | " | " | $CH_3$ | H | H | $p-C_6H_4-SO_3H$ | rotst. braun |
| 126 | " | " | $CH_3$ | $CH_2-C_6H_5$ | H | $p-C_6H_4-SO_3H$ | rotst. braun |
| 127 | " | 2-Amino-4-(N'-methyl-aminomethyl)-benzolsulfonsäure | $CH_3$ | H | H | $p-C_6H_4-SO_3H$ | olivbraun |
| 128 | " | " | $CH_3$ | $C_2H_5$ | H | $p-C_6H_4-SO_3H$ | olivbraun |

Tabelle 3 (Fortsetzung)

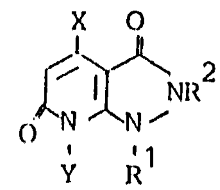

| Bsp. | Reaktivkomponente | Diazokomponente | Kupplungskomponente X | Y | $R^1$ | $R^2$ | Farbton |
|---|---|---|---|---|---|---|---|
| 129 | 5-Chlor-2,6-difluor-4-(dichlormethyl)pyrimidin | 2-Amino-4-(N'-methyl-aminomethyl)-benzolsulfonsäure | $CH_3$ | H | H | p-$C_6H_4$-$SO_3H$ | olivbraun |
| 130 | " | 2,4-Diamino-benzolsulfonsäure | $CH_3$ | H | H | p-$C_6H_4$-$SO_3H$ | olivbraun |

Beispiel 131

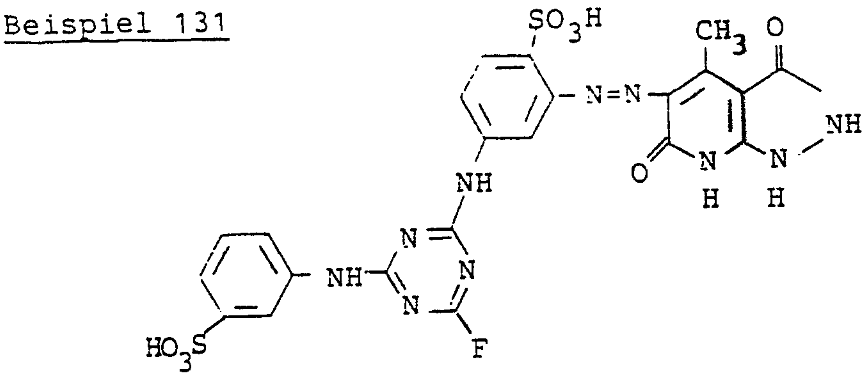

Variante A:

17,3 g m-Sulfanilsäure (Amin-Komponente) werden in 500 ml Eiswasser gelöst. Man läßt dann 13,5 g 2,4,6-Trifluor-1,3,5-triazin zutropfen, wobei man gleichzeitig verdünnte Natronlauge zugibt, um einen pH von 3-4 einzuhalten. Nach Zugabe des Cyanurfluorids rührt man noch 30 Minuten nach und tropft dann eine Mischung von 36,5 g 2-Sulfo-5-amino-benzol⟨1-azo-5⟩-4-methyl-1,2-dihydro-7H-pyrazolo/3,4-b/pyridin-3,6-dion in 500 ml Wasser und 14 ml konz. Natronlauge (d = 1,5) bei 0-5°C zu, wobei man einen pH von 8,5 nicht überschreitet. Man rührt solange bei 8-8,5, bis keine Veränderung des pH mehr auftritt, und salzt dann mit 10 Vol.-% Kochsalz aus. Nach dem Absaugen, Trocknen und Mahlen erhält man ein in Wasser mit dunkelbrauner Farbe lösliches Pulver ($\lambda$ max = 443 nm).

Der für die Kondensation eingesetzte Farbstoff wird hergestellt durch Diazotieren von 2-Amino-4-acetylamino-benzolsulfonsäure und kuppeln auf 4-Methyl-1,2-dihydro-

7H-pyrazolo/3,4-b/pyridin-3,6-dion im neutralen bis schwach alkalischen Milieu sowie nachfolgende Verseifung der Acetylamino-Gruppierung.

Variante B:

Das Kondensationsprodukt aus 17,3 g m-Sulfanilsäure und 13,5 g 2,4,6-Trifluor-1,3,5-triazin (vgl. Variante A) wird bei 0-5°C mit einer neutralen Lösung aus 18,8 g 2,4-Diaminobenzolsulfonsäure in 200 ml Wasser versetzt und durch Zugabe von verdünnter Natronlauge der pH bei 8,0 gehalten. Man läßt auf Raumtemperatur erwärmen und rührt solange, bis keine Veränderung des pH mehr auftritt. Anschließend stellt man mit 25 ml halbkonzentrierter Salzsäure auf pH 2,5 und kühlt durch Eiszugabe auf 5°C ab. Es wird mit 7 ml 30 %iger Natriumnitritlösung tropfenweise diazotiert und 30 Minuten nachgerührt. Diese Diazoniumsalzmischung gibt man in eine neutrale Lösung aus 16,5 g 4-Methyl-1,2-dihydro-7H-pyrazolo/3,4-b/pyridin-3,6-dion in 250 ml Wasser/Sodalösung und hält durch Zugabe von wenig verdünnter Natronlauge den pH auf 8,0. Man salzt mit 10 Vol.-% Kochsalz aus und saugt ab. Nach Trocknen und Mahlen werden 65 g eines braunen Farbstoffpulvers isoliert, das mit den unter Variante A beschriebenen identisch ist und eine licht- und naßechte Färbung auf Baumwolle liefert.

Wenn man nach den Angaben dieses Beispiels 131 verfährt, jedoch unter Verwendung der in der nachfolgenden Tabelle aufgeführten Amin-, Diazo- und Kupplungskomponenten, so erhält man gleichfalls wertvolle Reaktivfarbstoffe.

Tabelle 4

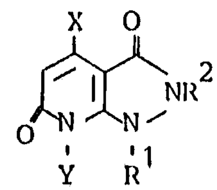

| Bsp. | Amin-Komponente | Diazokomponente | Kupplungskomponente X | Y | $R^1$ | $R^2$ | Farbton |
|---|---|---|---|---|---|---|---|
| 132 | m-Sulfanilsäure | 2,4-Diamino-benzol-sulfonsäure | $CH_3$ | H | H | $C_6H_5$ | olivbraun |
| 133 | " | " | $CH_3$ | $C_2H_5$ | H | $C_6H_5$ | olivbraun |
| 134 | p-Sulfanilsäure | " | $CH_3$ | H | H | $C_6H_5$ | olivbraun |
| 135 | " | " | $CH_3$ | H | H | $p-C_6H_4-SO_3H$ | olivbraun |
| 136 | Anilin | " | $CH_3$ | H | H | " | olivbraun |
| 137 | m-Sulfanilsäure | " | $CO_2H$ | H | H | $C_6H_5$ | gelbst. Braun |
| 138 | " | 2,5-Diamino-benzol-sulfonsäure | $CH_3$ | H | H | $C_6H_5$ | rotst. Braun |
| 139 | " | " | $CH_3$ | H | H | $p-C_6H_4-SO_3H$ | rotst. Braun |
| 140 | Ammoniak | " | $CH_3$ | H | H | " | rotst. Braun |
| 141 | Ethanolamin | " | $CH_3$ | H | H | " | rotst. Braun |
| 142 | m-Sulfanilsäure | 2-Amino-4-(4'-methyl-aminomethyl)-benzolsulfonsäure | $CH_3$ | H | H | " | olivbraun |

Tabelle 4 (Fortsetzung)

Kupplungskomponente 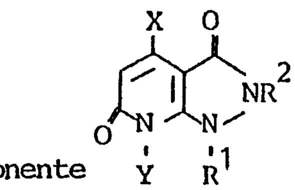

| Bsp. | Amin-Komponente | Diazokomponente | X | Y | $R^1$ | $R^2$ | Farbton |
|---|---|---|---|---|---|---|---|
| 143 | p-Sulfanilsäure | 2-Amino-4-(4'-methyl-aminomethyl)-benzolsulfonsäure | $CH_3$ | H | H | p-$C_6H_4$-$SO_3H$ | olivbraun |
| 144 | Ethanolamin | " | $CH_3$ | H | H | " | olivbraun |
| 145 | Anilin | " | $CO_2H$ | H | H | $C_6H_5$ | orangebraun |
| 146 | m-Sulfanilsäure | " | $CO_2H$ | H | H | $C_6H_5$ | orangebraun |
| 147 | m-Sulfanilsäure | 2-Amino-5-amino-methyl-1-naphthalinsulfonsäure | $CH_3$ | H | H | p-$C_6H_4$-$SO_3H$ | braun |
| 148 | p-Sulfanilsäure | " | $CH_3$ | $C_2H_5$ | H | " | braun |
| 149 | Ethylamin | 2-Amino-5-aminomethyl-1,7-naphthalindisulfonsäure | $CH_3$ | H | H | " | braun |
| 150 | m-Sulfanilsäure | 3'-(N'-Methylamino-methyl-6'-sulfo-4-aminoazobenzol | $CH_3$ | H | H | " | rotst. dkl. braun |

Die in Tabelle 4 aufgeführten Farbstoffe finden Verwendung zum Drucken und Färben von Cellulosefasern, speziell von Baumwollgeweben. Verwendet man in den Beispielen 131 bis 150 anstelle des 2,4,6-Trifluor-1,3,5-triazin das analog reagierende 2,4,6-Trichlor-1,3,5-triazin (Cyanurchlorid) so sind ebenfalls wertvolle Reaktivfarbstoffe darstellbar.

Beispiel 151

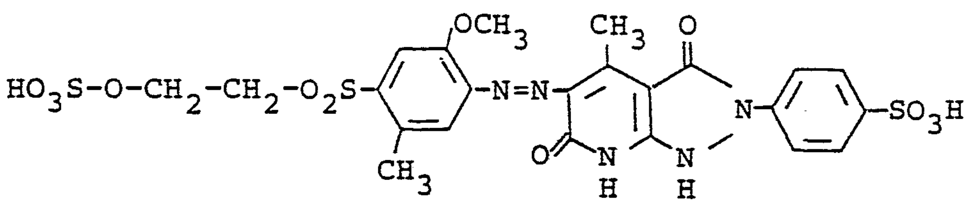

23,6 g pulverisiertes 4-Amino-5-methoxy-2-methylphenylsulfatoethylsulfon werden in 200 ml Wasser und 100 g Eis angerührt und mit 18 ml 30 %iger Natriumnitritlösung diazotiert. Nach 1 Stunde entfernt man den Nitritüberschuß durch Zugabe von Amidosulfonsäure und gibt diese Suspension zu einer Lösung von 23,3 g 4-Methyl-2-(4'-sulfophenyl)-1,2-dihydro-7H-pyrazolo/3,4-b/pyridin-3,6-dion in 250 ml Wasser. Durch Zugabe von Sodalösung hält man den pH der Reaktionsmischung zwischen 4,0 bis 5,0 und salzt nach 2 Stunden Rühren mit 100 g Kochsalz aus. Nach mehrstündigem Rühren saugt man ab und trocknet die dunkelbraune Farbstoffpaste bei 40-50°C. Es werden ca. 60 g salzhaltiger dunkelbrauner Farbstoff isoliert, der auf Baumwolle eine klare lichtechte Braunfärbung liefert.

Anwendungsbeispiele

Färbung auf synthetischem Polyamidmaterial:
0,1 g des nach Beispiel 1 hergestellten Farbstoffs werden in 100 ml Wasser heiß aufgelöst, 5 ml 10 %ige Ammoniumacetatlösung zugesetzt und auf ein Volumen von 500 ml mit Wasser verdünnt. Man geht mit 10 g Polyamidfaser in das Färbebad ein, bringt das Färbebad innerhalb von 20 Minuten zum Kochen, setzt 4 ml 100 %ige Essigsäure zu und hält 1 Stunde auf Kochtemperatur. Danach wird gespült und bei 70-80°C getrocknet. Man erhält eine Färbung in olivbraunem Ton mit sehr guter Licht- und Naßechtheit.

Färbung auf Wolle:
In ein Bad, welches in 500 Teilen Wasser 0,5 Teilen Glaubersalz, 0,4 Vol.-Teile Essigsäure und 0,2 Teile Farbstoff gemäß Beispiel 1 enthält, geht man bei 40°C mit 10 Teilen Wollflanell ein. Man steigert die Temperatur innerhalb von 30 Minuten gleichmäßig bis zum Sieden und färbt den Wollflanell noch eine Stunde bei Siedetemperatur. Das gefärbte Gut wird hierauf gespült und wie üblich fertiggestellt. Man erhält eine gleichmäßig braune Färbung mit hervorragenden Echtheiten.

Färbung auf Leder:
Man weicht 100 Teile reines Chromveloursleder in Gegenwart von wenig Ammoniak ein, spült es und führt es in eine Farbflotte ein, die eine Lösung aus 6 Teilen Farbstoff des Beispiels 10 in 2000 Teilen Wasser bei 60°C enthält. Man färbt eine Stunde bei 60°C, führt dann 3 Teile Ameisensäure ein und färbt weitere 30 Minuten. Das Leder wird getrocknet und der üblichen mechanischen Behandlung unterworfen. Man erhält eine lebhaft olivbraune Farbtönung mit guten Echtheitseigenschaften gegenüber Licht, Waschen, Lösungsmittel und Abnutzung.

Färbung auf Baumwolle:
In einem Färbebecher von 300 ml Inhalt, der sich in einem beheizbaren Wasserbad befindet, werden 168 ml Wasser von 20-25° vorgelegt. Man teigt 0,3 g des nach Beispiel 132 erhaltenen Farbstoffs mit 2 ml kaltem Wasser gut an und fügt 30 ml heißes Wasser (70°) zu; dabei löst sich der Farbstoff auf. Die Farbstofflösung wird dem vorgelegten Wasser zugegeben und 10 g Baumwollgarn in dieser Färbeflotte ständig in Bewegung gehalten. Innerhalb von 10 Minuten erhöhte man die Temperatur der Färbeflotte auf 40°-50°, setzt 10 g wasserfreies Natriumsulfat zu und färbt 30 Minuten weiter. Dann fügt man der Färbeflotte 4 g wasserfreies Natriumcarbonat zu und färbt 60 Minuten bei 40-50°. Man entnimmt dann das gefärbte Material der Färbeflotte, entfernt die anhaftende Flotte durch Auswringen oder Abpressen und spült das Material zunächst mit kaltem Wasser und dann mit heißem Wasser so lange, bis die Spülflotte nicht mehr angeblutet wird. Anschließend wird das gefärbte Material in 200 ml einer Flotte, die 0,2 g

Natriumalkylsulfat enthält, während 20 Minuten bei Siedetemperatur geseift, erneut gespült und bei 60-70° in einem Trockenschrank getrocknet. Man erhält ein schwach gelbstichiges Braun von hervorragenden Wasch- und Lichtechtheiten.

Klotzvorschrift

30 Teile des nach Beispiel 131 dargestellten Farbstoffs werden in 1000 Teilen Wasser gelöst. Mit dieser Lösung wird ein Baumwollgewebe fouladiert und bis zu einer Gewichtszunahme von 90 % abgepreßt. Die noch feuchte Baumwolle wird bei 70° während 30 Minuten in einem Bad, welches in 1000 Teilen Wasser 200 Teile kalziniertes Natriumsulfat und 10 Teile kalziniertes Natriumcarbonat gelöst enthält, behandelt. Anschließend wird die Färbung in üblicher Weise fertiggestellt. Man erhält ein neutrales Braun mit gutem Echtheitsniveau.

Druckvorschrift

Wenn man Baumwollnessel mit einer Druckpaste bedruckt, die im Kilogramm 20 g des nach Beispiel 139 dargestellten Farbstoffs, 100 g Harnstoff, 300 ml Wasser, 500 g Alginatverdickung (60 g Natriumalginat/kg Verdickung) und 10 g Soda enthält, und die mit Wasser auf 1 kg ausgefüllt wurde, trocknet, 1 Minute bei 103°C dämpft, mit heißem Wasser spült und kochend seift, so erhält man einen klaren rotstichig braunen Druck von guter Naß- und Lichtechtheit.

2 Teile des gemäß Beispiel 120 erhaltenen Farbstoffes werden mit 20 g Harnstoff vermischt, in 28 ml Wasser gelöst und in 40 g einer 5 %igen Natriumalginatverdickung eingerührt. Dann fügt man noch 10 ml einer 10 %igen Natriumcarbonatlösung zu.

Mit dieser Druckfarbe bedruckt man ein Baumwollgewebe auf einer Roulexdruckmaschine, trocknet und dampft den erhaltenen Druck 8 Minuten bei 105°C. Dann wird das bedruckte Gewebe in kaltem und heißem Wasser gründlich gespült und getrocknet.

Patentansprüche

1. Farbstoffe der allgemeinen Formel

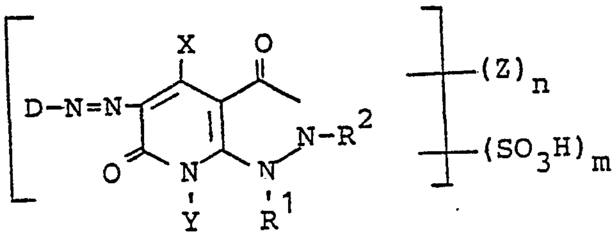

(I)

worin

D = gegebenenfalls durch ein Metallkation komplexierter Rest einer Diazokomponente der Benzol-, Naphthalin- oder Heterocyclenreihe,

X = Wasserstoff, gegebenenfalls substituiertes Alkyl, gegebenenfalls substituiertes Aryl, $COOR^3$, $CON(R^3)_2$, $CONHR^3$, $NHR^3$, gegebenenfalls substituiertes Hetaryl,

Y = Wasserstoff, gegebenenfalls substituiertes Alkyl, gegebenenfalls substituiertes Aryl, Alkenyl, OH, $NHCOR^3$,

Z = Rest einer Reaktivgruppe,

n = 0 bis 2,

m = 0 bis 6,

wobei

$R^1$, $R^2$ und $R^3$ gleich oder verschieden sind und für Wasserstoff, gegebenenfalls substituiertes Alkyl, gegebenenfalls substituiertes Aryl, gegebenenfalls substituiertes Hetaryl, gegebenenfalls substituiertes Aralkyl, gegebenenfalls substituiertes Alkenyl oder Acyl oder für gegebenenfalls durch O, NH, SO, $SO_2$ unterbrochenes Alkenylen stehen, und wobei die Substituenten Z und/oder $SO_3H$ an die Reste D und/oder X und/oder $R_1$ und/oder $R_2$ und/oder $R_3$ gebunden sind.

2. Farbstoffe gemäß Anspruch 1, wobei in der Formel (I) die Substituenten bzw. Indices folgende Bedeutung besitzen:

D = gegebenenfalls durch $SO_3H$ und/oder Chlor und/oder Alkoxy ($C_1$-$C_4$) und/oder Alkyl ($C_1$-$C_4$) und/oder Acetylamino und/oder Carbalkoxy und/oder Sulfonamido substituiertes Phenyl, gegebenenfalls durch $SO_3H$ und/oder Chlor und/oder Alkoxy ($C_1$-$C_4$) und/oder Alkyl ($C_1$-$C_4$) substituiertes Naphthyl, gegebenenfalls durch $SO_3H$ substituiertes 4-(Phenylazo)phenyl, gegebenenfalls durch $SO_3H$ substituiertes Biphenylyl

X = H, Alkyl $(C_1-C_4)$, Phenyl, Naphthyl, Benzyl, Alkoxy$(C_1-C_4)$phenyl, COOH,

Y = H, Alkyl$(C_1-C_4)$, Phenyl, Naphthyl, Benzyl, Alkoxy$(C_1-C_4)$phenyl,

$R^1$ = H, Alkyl $(C_1-C_4)$,

$R^2$ = H, $C_6H_5$, gegebenenfalls durch $SO_3H$, OH, Cl, COOH substituiertes Alkyl $(C_1-C_4)$, $C_6H_4-SO_3H$,

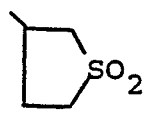 ,

n = 0 und

m = 1 oder 2.

3. Farbstoffe gemäß Anspruch 1, wobei in der Formel (I) die Substituenten bzw. Indices folgende Bedeutung besitzen:

D = Rest einer Diazokomponente der Benzol- oder der Naphthalinreihe,

X = H, Alkyl $(C_1-C_4)$, Benzyl, Phenylethyl, COOH, Phenyl,

Y = H, Alkyl $(C_1-C_4)$, Benzyl, Phenylethyl, Phenyl,

$R^1$ = H, Alkyl ($C_1$-$C_4$),

$R^2$ = H, gegebenenfalls durch $SO_3H$ substituiertes Phenyl, gegebenenfalls durch $SO_3H$, OH, Cl, COOH substituiertes Alkyl ($C_1$-$C_4$),

Z = Reaktivrest der Halogenpyrimidinylamino-, Halogentriazinylamino- oder der Vinylsulfonyl-Reihe,

m = 1, 2 oder 3,

n = 1 oder 2.

4. Farbstoffe gemäß Anspruch 3, wobei Z eine der folgenden Bedeutungen besitzt:

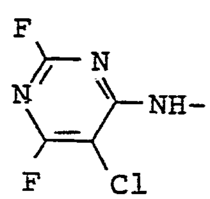 , 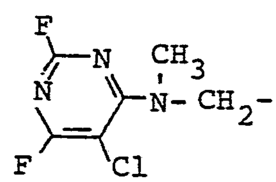 ,

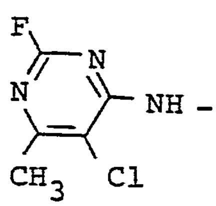 , 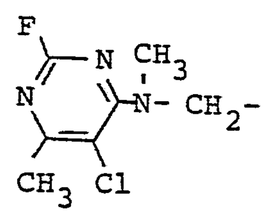 ,

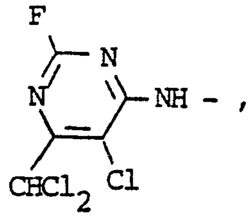 , 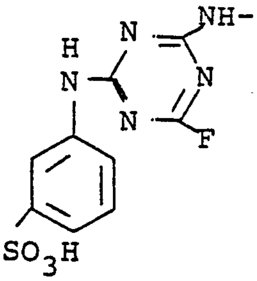 ,

$HO_3S-O-CH_2-CH_2-O_2S$ -

5. Verfahren zur Herstellung von Farbstoffen der Formel (I) aus Anspruch 1, bei welchen D, X, Y, $R_1$, $R_2$, Z, m und n die dort angegebene Bedeutung besitzen, dadurch gekennzeichnet, daß Amine der Formel

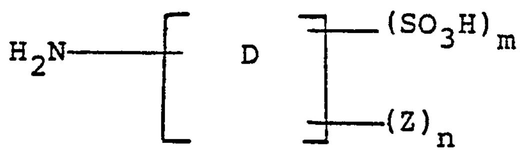

(II)

diazotiert und mit 3,6-Dioxo-1,2-dihydro-7H-pyrazolo-/3,4-b/pyridinen der Formel

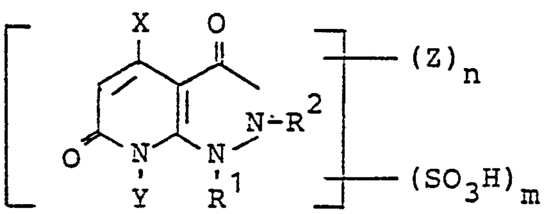

(III)

kuppelt, wobei in (II) und (III) D, X, Y, $R_1$, $R_2$, Z, m und n die in Anspruch 1 angegebene Bedeutung besitzen.

6. Verbindungen der Formel

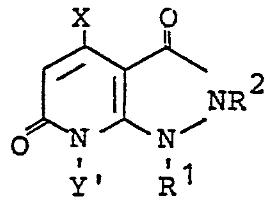

(IV)

worin

X = Wasserstoff, gegebenenfalls substituiertes Alkyl, gegebenenfalls substituiertes Aryl, $COOR^3$, $CON(R^3)_2$, $CONHR^3$, $NHR^3$, gegebenen falls substituiertes Hetaryl,

Y'= gegebenenfalls substituiertes Alkyl, gegebenen falls substituiertes Aryl, Alkenyl, OH, $NHCOR^3$ und wobei

$R^1$, $R^2$ und $R^3$ gleich oder verschieden sind und für Wasserstoff, gegebenenfalls substituiertes Alkyl, gegebenenfalls substituiertes Aryl, gegebenenfalls substituiertes Hetaryl, gegebenenfalls substituiertes Aralkyl, gegebenenfalls substituiertes Alkenyl oder Acyl stehen.

7. Verbindungen gemäß Anspruch 6, wobei in der Formel (IV) die Substituenten folgende Bedeutung besitzen:

X = H, $CH_3$, $CH_2SO_3H$, Phenyl, 3(bzw. 4)-Nitrophenyl, 3(bzw. 4)-Aminophenyl, $CO_2H$, $CO_2CH_3$, $CO_2C_2H_5$, $CONH_2$, $CONHCH_3$, $CONHC_2H_5$, $CON(CH_3)_2$, $CON(C_2H_5)_2$, $CONHC_6H_5$, OH, $NH_2$,

Y = $CH_3$, $C_2H_5$, Allyl, ß-Hydroxyethyl, ß-Chlorethyl, ß-Sulfoethyl, Phenyl, Methylphenyl, Chlorphenyl, Benzyl, OH, $NHCOCH_3$, und

$R^1$ und $R^2$ gleich oder voneinander verschieden sind und für H, $CH_3$, $C_2H_5$, ß-Hydroxyethyl, 3-Sulfolanyl, Phenyl, 2(3 oder 4)-Sulfophenyl, 3(bzw. 4)-Nitrophenyl, 3(bzw. 4)-Aminophenyl, $COCH_3$, $COC_6H_5$, $CH_2C_6H_5$ stehen.

8. Verwendung der Farbstoffe gemäß Anspruch 1 zum Färben und Bedrucken von Fasermaterialien.

9. Mit Hilfe von Farbstoffen gemäß Anspruch 1 gefärbtes oder bedrucktes Gewebe.